# EUROPEAN PATENT APPLICATION

(11) **EP 4 498 466 A1**
(43) Date of publication of application: **29.01.2025**
(21) Application number: 22939297.2
(22) Date of filing: 29.04.2022
(51) Int. Cl.: H01M 10/0525, H01M 4/58, H01M 10/0567

(54) **SECONDARY BATTERY AND BATTERY MODULE COMPRISING SAME, BATTERY PACK, AND ELECTRICAL DEVICE**

(71) Applicant: Contemporary Amperex Technology (Hong Kong) Limited, Central, Central And Western District (HK)
(72) Inventor: ZHANG, Limei, Ningde, Fujian 352100 (CN); CHEN, Peipei, Ningde, Fujian 352100 (CN); LIU, Jiao, Ningde, Fujian 352100 (CN)
(74) Representative: Gong, Jinping
(86) International application number: PCT/CN2022/090520
(87) International publication number: WO 2023/206449

(57) **Abstract**

The present application provides a secondary battery, a battery module, a battery pack and an electrical device containing the same. The secondary battery comprises a positive electrode plate, and a non-aqueous electrolytic solution, wherein the positive electrode plate comprises a positive electrode active material with a core-shell structure, and the positive electrode active material comprises a core and a shell covering the core, the core comprises Li₁₊ₓMn_{1-y}A_{y}P_{1-z}R_{z}O₄, the shell comprises a first cladding layer covering the core and a second cladding layer covering the first cladding layer, and the non-aqueous electrolytic solution comprises a first additive comprising one or more of the compounds shown in Formula 1. The present application enables the secondary battery to simultaneously have high energy density with good rate performance, cycling performance, storage performance and safety performance.

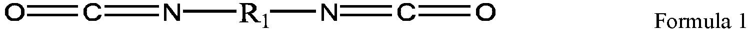

## Description

### TECHNICAL FIELD

The present application belongs to the technical field of battery, in particular to a secondary battery, a battery module, a battery pack and an electrical device containing the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources; however, lithium manganese phosphate is prone to leach out manganese ion during charging, resulting in rapid capacity decay, thereby constraining its commercialization.

### SUMMARY

An object of the present application is to provide a secondary battery, a battery module, a battery pack and an electrical device containing the same, which enables the secondary battery to simultaneously have a high energy density as well as good rate performance, cycling performance, storage performance, and safety performance.

A first aspect of the present application provides a secondary battery comprising a positive electrode plate, and a non-aqueous electrolytic solution, wherein
the positive electrode plate comprises a positive electrode active material with a core-shell structure, and the positive electrode active material comprises a core and a shell covering the core, in which
   the core comprises Li₁₊ₓMn_{1-y}A_{y}P_{1-z}R_{z}O₄, x being from -0.100 to 0.100, y being from 0.001 to 0.500, and z being from 0.001 to 0.100; A being one or more selected from Zn, Al, Na, K, Mg, Mo, W, Ti, V, Zr, Fe, Ni, Co, Ga, Sn, Sb, Nb, and Ge, optionally one or more selected from Fe, Ti, V, Ni, Co, and Mg; R being one or more selected from B, Si, N, and S;
   the shell comprises a first cladding layer covering the core and a second cladding layer covering the first cladding layer, in which
      the first cladding layer comprises crystalline pyrophosphates MP₂O₇ and phosphate XPO₄, M and X being one or more selected from Li, Fe, Ni, Mg, Co, Cu, Zn, Ti, Ag, Zr, Nb and Al; and
      the second cladding layer comprises carbon; and
the non-aqueous electrolytic solution comprises a first additive comprising one or more of the compounds shown in Formula 1: 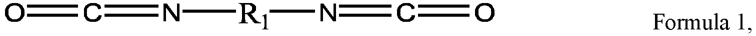
in which R₁ represents at least one of the group consisting of the following groups substituted or unsubstituted by Rₐ: C2-C10 divalent alkyl, C2-C10 divalent heteroalkyl, C6-C18 divalent aryl, C7-C18 divalent aryl alkyl, C7~C18 divalent alkyl aryl, C8~C18 divalent alkyl aryl alkyl, C13~C18 divalent aryl alkyl aryl, C2-C18 divalent heteroaryl, C3-C18 divalent heteroarylalkyl, C3-C18 divalent alkylheteroaryl, C4-C18 divalent alkylheteroarylalkyl, C5-C18 divalent heteroarylalkylheteroaryl, C3-C18 divalent alcyl, C4~C18 divalent alcyl alkyl, C4~C18 divalent alkyl alcyl, C5~C18 divalent alkyl alcyl alkyl, C7~C18 divalent alcyl alkyl alcyl, C2~C18 divalent heteroalcyl, C3~C18 divalent heteroalcyl alkyl, C3~C18 divalent alkyl heteroalcyl, C4~C18 divalent alkyl heteroalcyl alkyl, and C5~C18 divalent heteroalcyl alkyl heteroalcyl.

Optionally, Rₐ comprises one or more selected from halogen atoms, -CN, -NCO, -OH, -COOH, -SOOH, carboxylate group, sulfonate group, sulfate group, C1~C10 alkyl, C2~C10 alkenyl, C2~C10 alkynyl, C2-C10 oxoalkyl, phenyl, and benzyl.

By specific elemental doping and surface cladding of lithium manganese phosphate, the present application can effectively reduce manganese ion's leaching out in the process of deintercalation and intercalation of lithium while promoting lithium ion's migration, thereby improving the rate performance, cycling performance, storage performance, and safety performance of secondary batteries. When the non-aqueous electrolytic solution comprises the first additive shown in Formula 1 above, the first additive can react with a trace amount of water in the non-aqueous electrolytic solution to form -NHCOOH, so as to reduce the generation of HF, reduce the acidity of the non-aqueous electrolytic solution, and thereby reduce the dissolution of the cladding layer, the leaching out of manganese ions, and the generation of gas. At the same time, the first additive shown in Formula 1 is also capable of generating a uniform and dense interfacial film on the surface of the negative electrode active material, reducing the reduction reaction of the leached-out manganese ions at the negative electrode. Therefore, the secondary battery of the present application can simultaneously have high energy density as well as good rate performance, cycling performance, storage performance and safety performance.

In embodiments of the present application, R₁ represents at least one of the group consisting of the following groups substituted or unsubstituted by Rₐ: C2~C10 alkylidene, C2~C10 oxoalkylidene, C2~C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m-cyclopentyldimethylene, p-cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene. Optionally, Rₐ comprises one or more selected from a fluorine atom, -CN, -NCO, -OH, -COOH, -SOOH, carboxylate group, sulfonate group, sulfate group, C1~C10 alkyl, C2-C10 alkenyl, C2-C10 alkynyl, C2-C10 oxoalkyl, phenyl and benzyl

When R₁ represents the above substituent group, it is capable of further reducing the generation of HF and lowering the acidity of the non-aqueous electrolytic solution, and at the same time helping to generate a uniform, dense interfacial film with low impedance on the surface of the negative electrode active material, whereby the improvement effect on the cycling performance and the storage performance of the secondary battery can be further enhanced.

In embodiments of the present application, the first additive comprises at least one of the following compounds:

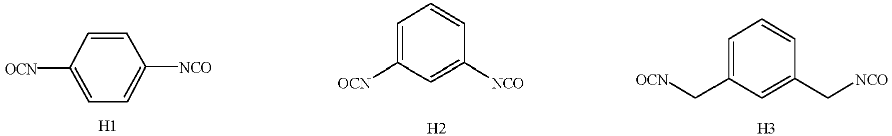

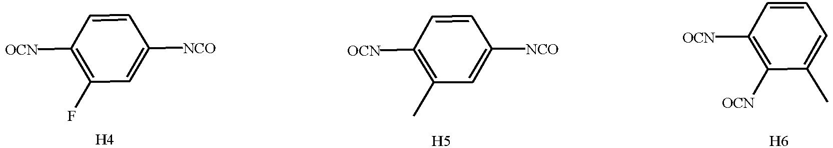

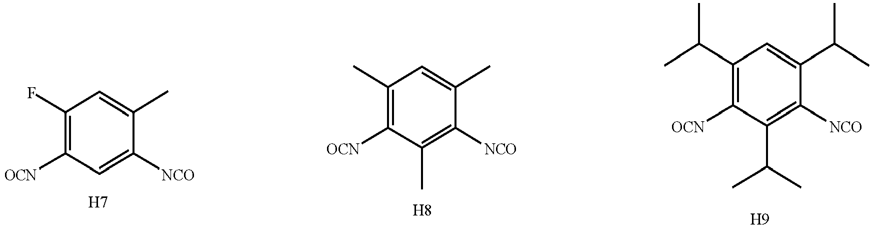

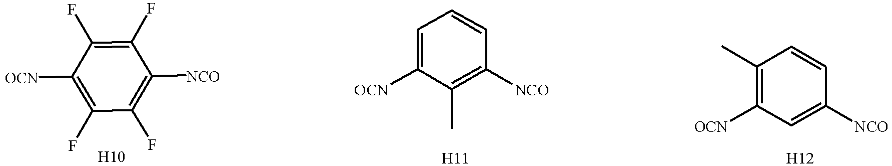

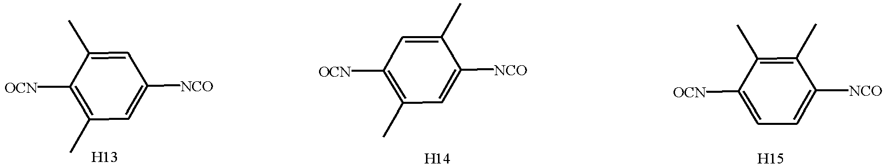

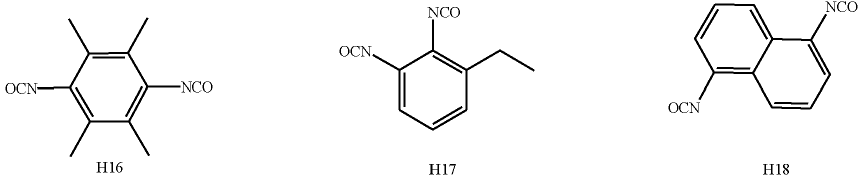

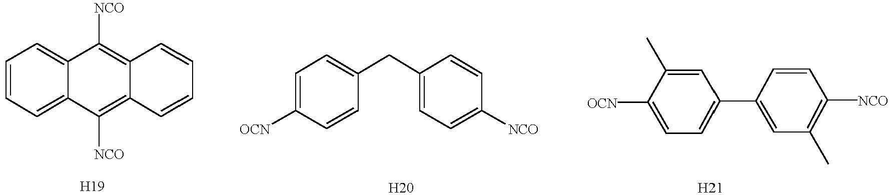

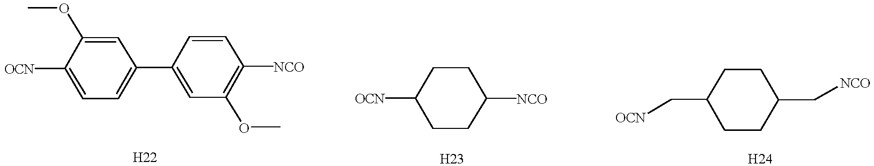

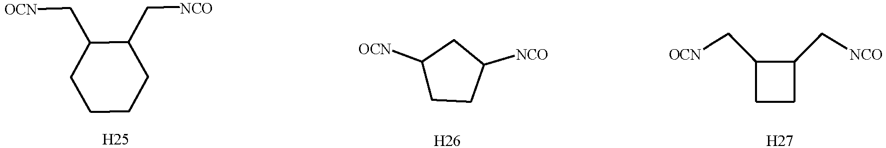

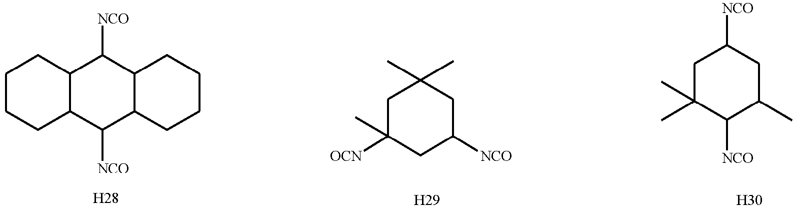

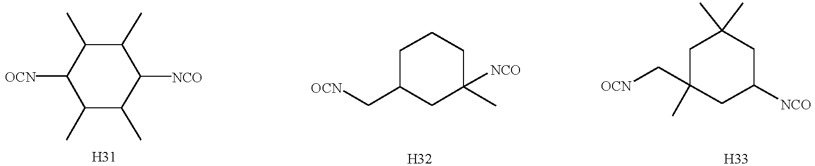

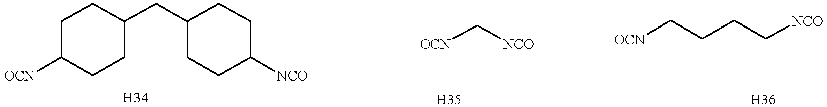

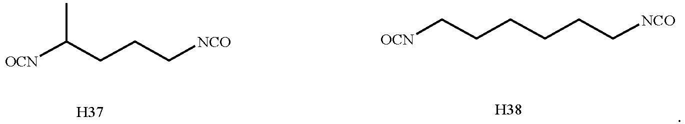

The inventors found in the course of their research that using at least one of the above compounds H1 to H38 as a first additive can further reduce the generation of HF and lower the acidity of the non-aqueous electrolytic solution, and at the same time help to generate a uniform and dense interfacial film with low impedance on the surface of the negative electrode active material, whereby the effect of improving the cycling performance and storage performance of the secondary battery can be further enhanced.

In embodiments of the present application, the first additive is present in an amount of W1% by weight, with W1 being from 0.01 to 20, optionally from 0.1 to 10, more optionally from 0.3 to 5, based on the total weight of the non-aqueous electrolytic solution. As a result, both the generation of HF and the acidity of the non-aqueous electrolytic solution can be reduced without deteriorating the negative electrode interface impedance, which in turn can significantly improve the cycling performance and storage performance of the secondary battery without affecting the capacity exertion and rate performance of the secondary battery.

In embodiments of the present application, the first cladding layer is applied in an amount of C1% by weigh, with C1 being greater than 0 and less than or equal to 7, optionally from 4 to 5.6, based on the weight of the core. As a result, the function of the first cladding layer can be effectively utilized without affecting the kinetic performance of the secondary battery due to an excessively thick cladding layer.

In embodiments of the present application, the second cladding layer is applied in an amount of C2% by weight, with C2 being greater than 0 and less than or equal to 6, optionally from 3 to 5, based on the weight of the core. As a result, the presence of the second cladding layer can avoid direct contact between the positive electrode active material and the electrolytic solution, reduce the erosion of the electrolytic solution on the positive electrode active material, and improve the conductivity of the positive electrode active material. When the amount of the second cladding layer is within the above range, the specific capacity of the positive electrode active material can be effectively improved.

In embodiments of the present application, W1/(C1+C2) is from 0.001 to 2, optionally from 0.01 to 1.5, and more optionally from 0.05 to 1. This can significantly enhance the improvement effect on the cycling performance and storage performance of the secondary battery, and at the same time improve the capacity exertion and rate performance of the secondary battery.

In embodiments of the present application, the non-aqueous electrolytic solution further comprises a second additive, and the second additive comprises one or more of ethylene sulfate, lithium difluorophosphate, lithium bisoxalatodifluorophosphate, R₂[FSO₃⁻]ₐ, and R₂[C_{b}F_{2b+1}SO₃⁻]ₐ, a being an integer from 1 to 5 and b being an integer from 1 to 6, and R₂ representing a metal cation or an organic group cation. Optionally, the metal cation comprises one or more selected from Li⁺, Na+, K, Rb⁺, Cs⁺, Mg²⁺, Ca²⁺, Ba²⁺, Al³⁺, Fe²⁺, Fe³⁺, Cu²⁺, Ni²⁺ and Ni³⁺. Optionally, the organic group cation comprises one or more selected from NH₄⁺, N(CH₃)₄⁺, and N(CH₂CH₃)₄⁺.

When the non-aqueous electrolytic solution comprises both the first additive and the second additive, it helps to significantly improve the cycling performance and the storage performance of the secondary battery, and at the same time enhances the capacity exertion and the rate performance of the secondary battery.

In embodiments of the present application, the second additive is present in an amount of W2% by weight, with W2 being from 0.01 to 20, optionally from 0.1 to 10, more optionally from 0.3 to 5, based on the total weight of the non-aqueous electrolytic solution. This can thereby effectively improve the capacity exertion and rate performance of the secondary battery.

In embodiments of the present application, the non-aqueous electrolytic solution further comprises a third additive, and the third additive comprises one or more of a cyclic carbonate compound containing unsaturated bonds, a halogenated cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound. The third additive helps to form a more dense and stable interfacial film on the surface of the positive electrode and/or the negative electrode active material, thereby helping to further enhance at least one of the cycling performance, the storage performance, and the rate performance of the secondary battery.

In embodiments of the present application, the third additive is present in an amount of W3% by weight, with W3 being from 0.01 to 10, optionally from 0.1 to 10, more optionally from 0.3 to 5, based on the total weight of the non-aqueous electrolytic solution.

In embodiments of the present application, in the core the ratio of y to 1-y is from 1:10 to 10:1, optionally from 1:4 to 1:1. Thereby, the energy density and the cycling performance of the secondary battery are further improved.

In embodiments of the present application, in the core the ratio of z to 1-z is from 1:9 to 1:999, optionally from 1:499 to 1:249. Thereby, the energy density and the cycling performance of the secondary battery are further improved.

In embodiments of the present application, A is selected from at least two of Fe, Ti, V, Ni, Co and Mg. Thereby, by A being two or more metals within the above range, and thus doping at the manganese site is conducive to enhancing the doping effect, further reducing the surface oxygen activity and inhibiting the leaching out of manganese ions.

In embodiments of the present application, the phosphate in the first cladding layer has an interplanar spacing ranging from 0.345 nm to 0.358 nm, and a crystal orientation (111) angle ranging from 24.25° to 26.45°. Thereby, the cycling performance and the rate performance of the secondary battery are further improved.

In embodiments of the present application, the pyrophosphate in the first cladding layer has an interplanar spacing ranging from 0.293 nm to 0.326 nm, and a crystal orientation (111) angle ranging from 26.41° to 32.57°. Thereby, the cycling performance and the rate performance of the secondary battery are further improved.

In embodiments of the present application, the weight ratio of the pyrophosphate and the phosphate in the first cladding layer is from 1:3 to 3:1, optionally from 1:3 to 1:1. Thereby, when the weight ratio of the pyrophosphate and the phosphate is in the suitable range, the leaching out of manganese ion can be effectively inhibited, and the content of impurity lithium on the surface can be effectively reduced, as such to reduce the interfacial side reaction, thus improving the rate performance, cycling performance, storage performance, and safety performance of the secondary battery.

In embodiments of the present application, the crystallinity of each of the pyrophosphate and phosphate is independently from 10% to 100%, optionally from 50% to 100%. Thus, the pyrophosphates and phosphates having the crystallinity in the above range are conducive to giving full play to the function of the pyrophosphates in hindering the leaching out of manganese ions, and the function of the phosphates in reducing the content of impurity lithium on the surface and reducing the interfacial side reaction.

In embodiments of the present application, the positive electrode active material has a Li/Mn anti-site defect concentration of 4% or less, optionally 2% or less. Thus, the specific capacity and the rate performance of the positive electrode active material can be improved.

In embodiments of the present application, the positive electrode active material has a lattice change rate of 6% or less, optionally 4% or less. Thus, the rate performance of the secondary battery can be improved.

In embodiments of the present application, the positive electrode active material has a surface oxygen valence of -1.88 or less, optionally -1.99 to -1.98. Thereby, the cycling performance and storage performance of the secondary battery can be improved.

In embodiments of the present application, the positive electrode active material has a compaction density at 3T of 2.0 g/cm³ or more, optionally 2.2 g/cm³ or more. Thus, it is beneficial to improving the volumetric energy density of the secondary battery.

A second aspect of the present application provides a battery module, comprising the secondary battery according to the first aspect of the present application.

A third aspect of the present application provides a battery pack, comprising the battery module according to the second aspect of the present application.

A fourth aspect of the present application provides an electrical device comprising at least one of the secondary battery of the first aspect of the present application, the battery module of the second aspect of the present application or the battery pack of the third aspect of the present application.

The battery module, battery pack and electrical device include the secondary battery of the present application, and thus have at least the same advantages as said secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a secondary battery according to an embodiment of the present application.
FIG. 2 is an exploded view of a secondary battery according to an embodiment of the present application.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application as shown in FIG. 4.
FIG. 6 is a schematic diagram of an electrical device according to an embodiment of the present application using the secondary battery of the present application as power.
FIG. 7 illustrates a comparison of an XRD spectrum of the core of the positive active materials prepared in Example 1-1 with the XRD standard spectrum (00-033-0804) of lithium manganese phosphate.

In the drawings, the accompanying drawings are not necessarily drawn to actual scale. The reference numerals are defined as follows:
1 battery pack
2 upper case body
3 lower case body
4 battery module
5 secondary battery
51 housing
52 electrode assembly
53 cover plate.

### DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

As used herein, the term "cladding layer" refers to a layer of material covering the core, and the layer of material may completely or partially covering the core. Use of the term "cladding layer" is used only for convenience of description and is not intended to limit the present invention. Alternatively, each cladding layer may be fully or partially covering the core.

As used herein, the term "source" refers to a compound that is a source of an element, and as examples, the types of the "source" include, but are not limited to, carbonates, sulfates, nitrates, monomers, halides, oxides and hydroxides.

As used herein, the terms "a plurality of ", and "more" mean two or more.

As used herein, heteroatoms comprise N, O, S, Si and the like.

As used herein, the term "alkyl" refers to a saturated hydrocarbon group, including both straight chain and branched chain structures. Examples of alkyl include, without being limited to, methyl, ethyl, propyl (e.g., n-propyl, isopropyl), butyl (e.g., n-butyl, iso-butyl, sec-butyl, tert-butyl), and pentyl (e.g., n-pentyl, iso-pentyl, neopentyl).

As used herein, the term "heteroalkyl" refers to a group in which at least one carbon atom in the alkyl group is substituted with a heteroatom. For example, an oxoalkyl group is a group in which at least one carbon atom in the alkyl group is substituted with an oxygen atom. The number of heteroatoms in a heteroalkyl group may be one or more, and the plurality of heteroatoms may be the same or different.

As used herein, the term "alkenyl" refers to an unsaturated hydrocarbon group containing carbon-carbon double bonds, including both straight chain and branched chain structures, and the number of carbon-carbon double bonds may be one or more. Examples of alkenyl groups include, but are not limited to, vinyl, propenyl, allyl, and butadienyl.

As used herein, the term "alkynl" refers to an unsaturated hydrocarbon group containing a carbon-carbon triple bond, including both straight chain and branched chain structures, and the number of carbon-carbon triple bonds may be one or more. Examples of the alkynyl group include, but are not limited to, ethynyl, propynyl, butynyl, and butadiynyl.

As used herein, the term "aryl" refers to a closed aromatic ring or ring system. When not explicitly stated, an "aryl" structure may be a monocyclic, polycyclic, or fused ring, among others. Examples of aryl groups include, but are not limited to, phenyl, naphthyl, anthracenyl, phenanthryl, biphenyl, triphenyl, tetraphenyl, triphenylene, pyrenyl, chrysenyl, perylenyl, indenyl, benzophenanthrenyl, fluorenyl, 9,9-dimethylfluorenyl, and spiro-bifluorenyl

As used herein, the term "heteroaryl" means that one or more atoms in the ring of the aryl group are elements other than carbon (e.g., N, O, S, Si, etc.). Examples of the heteroaryl group include, but are not limited to, pyrrolyl, furanyl, thiophenyl, indolyl, benzofuranyl, benzothiophenyl, dibenzofuranyl, dibenzothiophenyl, carbazolyl, indenocarbazolyl, indolocarbazolyl, pyridinyl, pyrimidinyl, pyrazinyl, pyridazinyl, triazinyl, oxazolyl, isoxazolyl, thiazolyl, and isothiazolyl. The number of heteroatoms in the heteroaryl group may be one or more, and the plurality of heteroatoms may be the same or different.

The term "alicyclic group" refers to carbocyclic systems of aliphatic nature, including cyclized alkyl, alkenyl and alkynyl groups, which may be monocyclic or polycyclic in structure (e.g., fused, bridged, spiro). Examples of alicyclic groups include, but are not limited to, cyclopropyl, cyclobutyl, cyclopentyl, cyclohexyl, cycloheptyl, cyclopentenyl, cyclohexenyl, and cyclohexynyl.

The term "heterocyclyl" means that one or more atoms in the alicyclic ring are elements other than carbon (e.g., N, O, S, Si, etc.). The number of heteroatoms in a heterocyclic group may be one or more, and the plurality of heteroatoms may be the same or different. Examples of heterocyclyl ring groups include, but are not limited to, oxiranyl, aziridinyl, and propiolactone group.

As used herein, when the substituent is "divalent" or a group with the suffix "ene", it refers to a group formed by removing two H atoms from a molecule.

As used herein, when the substituent indicates a group consisting of certain groups, it includes a group formed by single bonding of these groups. For example, when the substituent denotes "at least one of the group consisting of a C2~C10 divalent alkyl group, a C6~C18 divalent aryl group", the substituent alone discloses alkylaryl or arylalkyl or alkylarylalkyl or arylalkylaryl formed by bonding a C2~C10 divalent alkyl group, a C6~C18 divalent aryl group, a C2~C10 divalent alkyl group with a C6~C18 divalent aryl group by a single bond.

In the context of the present application, substituents of compounds are disclosed as groups or ranges. It is explicitly expected that such a description includes each individual subcombination of members of these groups and ranges. For example, the term "C1-C6 alkyl group" is explicitly expected to disclose C1, C2, C3, C4, C5, C6, C1-C6, C1-C5, C1-C4, C1-C3, C1-C2, C2-C6, C2-C5, C2-C4, C1-C3, C1-C2, C3-C6, C3-C5, C3-C4, C4-C6, C4-C5, C5-C6, alkyl groups.

The inventors of the present application have found in practical operations that manganese ion's leaching out is serious during the deep charging and discharging of the lithium manganese phosphate positive electrode active materials. Although there are attempts in the prior art to clad the lithium manganese phosphate with lithium iron phosphate, thereby reducing the interfacial side reaction, such cladding cannot prevent the leached-out manganese ions from migrating into the non-aqueous electrolytic solution. The leached-out manganese ions are reduced to manganese metal after migrating to the negative electrode. The manganese metal thus produced is equivalent to a "catalyst", which can catalyze the decomposition of the SEI film (solid electrolyte interphase) on the surface of the negative electrode, and part of the by-products are gases, which can easily lead to the expansion of the battery, affecting the safety of the secondary battery. The other part is deposited on the surface of the negative electrode, which will hinder the passage of lithium ions in and out of the negative electrode, resulting in an increase in the impedance of the secondary battery, thereby affecting the kinetic performance of the battery. In addition, in order to replenish the lost SEI film, the non-aqueous electrolytic solution and the active lithium ions inside the battery are constantly consumed, which can bring irreversible effects on the capacity retention rate of the secondary battery.

The inventors, after thorough consideration on a positive electrode and a non-aqueous electrolytic solution, have designed a secondary battery capable of simultaneously combining a high energy density with good rate performance, cycling performance, storage performance and safety performance.

Specifically, a first aspect of the present application provides a secondary battery.

### SECONDARY BATTERY

A secondary battery, also known as a rechargeable battery or accumulator, is a battery that can continue to be used by activating its active material by means of charging after the battery has been discharged. Typically, a secondary battery includes an electrode assembly and a non-aqueous electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes and at the same time allowing active ions to pass through. The non-aqueous electrolytic solution functions to conduct active ions between the positive electrode plate and the negative electrode plate.

### [Positive electrode plate]

The secondary battery of the present application adopts a positive electrode plate comprising at least a positive electrode active material with a core-shell structure wherein the positive electrode active material comprises a core and a shell cladding the core. The core comprises Li₁₊ₓMn_{1-y}A_{y}P_{1-z}R_{z}O₄, x being from -0.100 to 0.100, y being from 0.001 to 0.500, and z being from 0.001 to 0.100; A being one or more selected from Zn, Al, Na, K, Mg, Mo, W, Ti, V, Zr, Fe, Ni, Co, Ga, Sn, Sb, Nb, and Ge, optionally one or more selected from Fe, Ti, V, Ni, Co, and Mg; R being one or more selected from B, Si, N, and S; the shell comprises a first cladding layer covering the core and a second cladding layer covering the first cladding layer, wherein the first cladding layer comprises crystalline pyrophosphates MP₂O₇ and phosphate XPO₄, M and X being one or more selected from Li, Fe, Ni, Mg, Co, Cu, Zn, Ti, Ag, Zr, Nb and Al; and the second cladding layer comprises carbon.

Unless otherwise stated, in the above chemical formula, when A represents more than two elements, the above range for the y value is not only for the stoichiometric number of each element as A, but also for the sum of the stoichiometric numbers of each element as A. For example, when A represents more than two elements A1, A2 ...... and An, each of the respective stoichiometric numbers y1, y2 ......and yn of respective A1, A2 ......and An must fall within the numerical range defined by the present application for x, and the sum of y1, y2...... and yn must also fall within such numerical range of the present application. Similarly, in the case where R is more than two elements, the limitations on numerical ranges for the stoichiometric numbers of R in the present application also have the above meaning.

The inventors found after extensive research that for the lithium manganese phosphate positive electrode active material, the problems such as serious leaching out of manganese ion and high surface reactivity may be caused by the Jahn-Teller effect of Mn³⁺ and channel size change of the Li⁺ after delithiation. For this reason, the inventor obtained a positive electrode active material capable of significantly reducing manganese ion's leaching out and reducing the rate of lattice change, by modifying lithium manganese phosphate with doping and cladding lithium manganese phosphate with multiple layers.

The lithium manganese phosphate positive electrode active material of the present application has a core-shell structure with two cladding layers, wherein the inner core comprises Li₁₊ₓMn_{1-y}AyP_{1-z}R_{z}O₄. The element A doped in the manganese site of the lithium manganese phosphate helps to reduce the rate of lattice change of the lithium manganese phosphate in the process of deintercalation and intercalation of lithium, to improve the structural stability of the lithium manganese phosphate positive electrode active material, greatly to reduce the leaching out of the manganese ions and to reduce the oxygen activity on the surface of the particles. The element R doped in the phosphorus site helps to change the degree of difficulty of the change in the bond length of the Mn-O bond, thereby reducing the lithium ion migration barrier, promoting lithium ion migration, and improving the rate performance of the secondary battery.

The first cladding layer of the positive electrode active material of the present application comprises a pyrophosphate and a phosphate. Due to the high migration barrier of transition metals in pyrophosphate (>1 eV), the leaching out of transition metal ions can be effectively inhibited. In addition, the phosphate has excellent ability to conduct lithium ions and can reduce the impurity lithium content on the surface.

The second cladding layer of the positive electrode active material of the present application is a carbon-containing layer, which can effectively improve the conductivity and desolvation ability of LiMnPO₄. In addition, the "barrier" effect of the second cladding layer can further hinder the migration of manganese ions into the non-aqueous electrolytic solution and reduce the erosion of the electrolytic solution on the positive electrode active material.

Therefore, the present application can effectively inhibit the leaching out of manganese ions during the intercalation/deintercalation of lithium and promote the migration of lithium ions by doping with specific elements and surface cladding, so as to improve the rate performance, the cycling performance, the storage performance and the safety performance of the battery.

It should be noted that the position of the main characteristic peaks of the core of positive electrode active material according to application are basically the same as that before doping with LiMnPCfy indicating that there is no impurity phase in the core of the doped lithium manganese phosphate positive electrode active material, and the improvement of the battery's performance is mainly caused by the elemental doping, rather than the impurity phase.

In the core, x is from -0.100 to 0.100, e.g., x may be 0.006, 0.004, 0.003, 0.002, 0.001, 0, - 0.001, -0.003, -0.004, -0.005, -0.006, -0.007, -0.008, -0.009, or -0.100.

In the core, y is from 0.001 to 0.500, e.g. y may be 0.1, 0.2, 0.25, 0.3, 0.35, 0.4, or 0.45.

In the core, z is from 0.001 to 0.100, for example z may be 0.001, 0.002, 0.003, 0.004, 0.005, 0.006, 0.007, 0.008, 0.009, or 0.100.

In some embodiments, optionally in the core, the ratio of y to (1-y) is from 1:10 to 10:1, optionally from 1:4 to 1:1. Herein y denotes the sum of the stoichiometric numbers of the Mn-site doping element. The energy density and cycling performance of a secondary battery may be further improved when the above conditions are met.

In some embodiments, optionally in the core, the ratio of z to (1-z) is from 1:9 to 1:999, optionally from 1:499 to 1:249. Herein y denotes the sum of the stoichiometric numbers of the P-site doping element. The energy density and cycling performance of a secondary battery may be further improved when the above conditions are met.

In some embodiments, optionally, A is selected from at least two of Fe, Ti, V, Ni, Co and Mg.

Simultaneous doping with two or more of the above elements at the manganese site in the lithium manganese phosphate positive electrode active material is favorable to enhancing the doping effect, further reducing the lattice change rate on the one hand, thereby reducing the leaching out of manganese ions and reducing the consumption of the non-aqueous electrolytic solution and active lithium ions, and on the other hand, also favoring further reduction of the surface oxygen activity and reduction of the interfacial side reaction between the positive electrode active material and the non-aqueous electrolytic solution, thereby improving the secondary battery's cycling performance and high-temperature storage performance.

In some embodiments, optionally the phosphate in the first cladding layer has an interplanar spacing ranging from 0.345 nm to 0.358 nm, and a crystal orientation (111) angle ranging from 24.25° to 26.45°.

In some embodiments, optionally the pyrophosphate in the first cladding layer has an interplanar spacing ranging from 0.293 nm to 0.326 nm, and a crystal orientation (111) angle ranging from 26.41° to 32.57°.

When the interplanar spacing and the crystal direction (111) angle of the phosphate and the pyrophosphate in the first cladding layer are in the above range, the impurity phase in the cladding layer can be effectively avoided, so as to enhance the specific capacity, the cycling performance, and the rate performance of the positive electrode active material.

In some embodiment of the present application, the weight ratio of the pyrophosphate and the phosphate in the first cladding layer is from 1:3 to 3:1, optionally from 1:3 to 1:1.

The suitable ratio of the pyrophosphate and the phosphate is conducive to giving full play to the synergistic effect thereof, which can effectively inhibit the leaching out of manganese ions, and also effectively reduce the content of impurity lithium on the surface, and reduce the interfacial side reaction, so as to enhance the rate performance, cycling performance and safety performance of the secondary battery. In addition, it can effectively avoid the following situations: if there is too much pyrophosphate and too little phosphate, the battery impedance may increase; if there is too much phosphate and too little pyrophosphate, the effect of inhibiting the leaching out of manganese ion is not significant.

In some embodiment of the present application, the crystallinity of the pyrophosphate and phosphate is each independently from 10% to 100%, optionally from 50% to 100%.

In the first cladding layer of the lithium manganese phosphate positive electrode active material according to the present application, the pyrophosphate and phosphate having a certain degree of crystallinity are conducive to maintaining the structural stability of the first cladding layer and reducing lattice defects. This is conducive to giving full play to the role of the pyrophosphate in hindering the leaching out of manganese ions on the one hand, and on the other hand, it is also conducive to the role of the phosphate in reducing the content of impurity lithium on the surface and lowering the valence of the oxygen on the surface, so as to reduce the interfacial side reaction between the positive electrode active material and the non-aqueous electrolytic solution, reduce the consumption of the non-aqueous electrolytic solution, and improve the cycling performance and storage performance of the secondary battery.

It is to be noted that in the present application, the crystallinity of the pyrophosphate and the phosphate can be adjusted, for example, by adjusting the conditions of the sintering process, such as the sintering temperature, the sintering time, and the like. The crystallinity of the pyrophosphates and phosphates may be measured by methods known in the art, for example by methods such as X-ray diffraction, density methods, infrared spectroscopy, differential scanning calorimetry and nuclear magnetic resonance absorption methods.

In some embodiments, optionally, the first cladding layer is applied in an amount of Clwt%, C1 being greater than 0 and less than or equal to 7, optionally from 4 to 5.6, based on the weight of the core.

When the applied amount of the first cladding layer is within the above range, it is able to further inhibit the leaching out of manganese ion while further promoting lithium-ion transport. In addition, it can effectively avoid the following situations: if the applied amount of the first cladding layer is too small, it may lead to insufficient inhibition of manganese ion's leaching out by pyrophosphate, and at the same time, the improvement of lithium-ion transport performance is not significant; if the applied amount of the first cladding layer is too large, it may lead to an excessively thick cladding layer, which will increase the impedance of the battery, and affect the kinetic performance of the secondary battery.

Optionally, in some embodiments, the second cladding layer is applied in an amount of C2wt%, C2 being greater than 0 and less than or equal to 6, optionally from 3 to 5, based on the weight of the core.

The carbon-containing layer as the second cladding layer can, on the one hand, play the function of a "barrier" to avoid direct contact between the positive electrode active material and the non-aqueous electrolytic solution, thereby reducing the erosion of the electrolytic solution on the positive electrode active material, and improving the safety performance of the secondary battery at high temperatures. On the other hand, its strong electrical conductivity can reduce the internal resistance of the battery, thus improving the kinetic performance of the secondary battery. However, since the carbon material has a low specific capacity, when the second cladding layer is used in an excessive amount, the overall specific capacity of the positive electrode active material may be reduced. Therefore, when the applied amount of the second cladding layer is in the above range, the kinetic performance and safety performance of the secondary battery can be further improved without sacrificing the specific capacity of the positive electrode active material.

Optionally, in some embodiments, the positive electrode active material has a Li/Mn anti-site defect concentration of 4% or less, optionally 2% or less.

The term Li/Mn anti-site defect refers to interchange of Li⁺ with Mn²⁺ in terms of its site in the LiMnPO₄ lattice. The Li/Mn anti-site defect concentration refers to a percentage of Li⁺ in the positive electrode active material interchanged with Mn²⁺ relative to the total amount of Li⁺. Since the Li⁺ transport channel is a one-dimensional channel and Mn²⁺ is difficult to migrate in the Li⁺ transport channel, the Mn²⁺ of the anti-site defects will hinder the Li⁺ transport. In the positive electrode active material of the present application, the specific capacity and rate performance of the positive electrode active material can be improved by controlling the Li/Mn anti-site defect concentration at a low level. The Li/Mn anti-site defect concentration in the present application may, for example, be tested according to JIS K 0131-1996.

In some embodiments, the positive electrode active material has a lattice change rate of 6% or less, optionally 4% or less.

The deintercalation and intercalation of lithium in LiMnPO₄ is a two-phase reaction. The interfacial stress of the two phases is determined by the level of the lattice change rate, and the smaller the lattice change rate is, the smaller the interfacial stress is, and the easier the Li⁺ transport is. Therefore, reducing the lattice change rate of the core will be favorable to enhance the Li⁺ transport ability, thereby improving the rate performance of the secondary battery.

In some embodiments, optionally, the positive electrode active material has a button-battery average discharge voltage of 3.5V or more and a discharge gram capacity of 140mAh/g or more; optionally, the average discharge voltage is 3.6V or more and the discharge gram capacity is 145mAh/g or more.

Although the average discharge voltage of the undoped LiMnPO₄ is 4.0 V or more, it has a lower discharge gram capacity, usually less than 120 mAh/g, and thus the energy density of the secondary battery is lower; adjusting the lattice change rate by doping can result in a substantial increase in the discharge gram capacity, and there is a significant increase in the overall energy density of the secondary battery in the presence of a slight decrease in the average discharge voltage.

In some embodiments, optionally, the positive electrode active material has a surface oxygen valence of -1.88 or less, optionally -1.98 to -1.88.

This is due to the fact that the higher the valence of oxygen in the compound is, the higher its ability to gain electron is, i.e., the higher the oxidizing property will be. In the lithium manganese phosphate positive electrode active material of the present application, by controlling the surface oxygen valence at a lower level, the reaction activity on the surface of the positive electrode active material can be reduced, and the interfacial side reaction between the positive electrode active material and the non-aqueous electrolytic solution can be reduced, thereby improving the cycling performance and the high-temperature storage performance of the secondary battery.

In some embodiments, the positive electrode active material has a compaction density at 3T (tonne) of 2.0 g/cm³ or more, optionally 2.2 g/cm³ or more.

The higher the compaction density of the positive electrode active material is, the greater the weight of the positive electrode active material per unit volume is. Thus, increasing the compaction density is conducive to improving volumetric energy density of the secondary battery. In the present application, the compaction density can be measured according to GB/T 24533-2009, for example.

The present application further provides a method for preparing the positive electrode active material, comprising a step of providing a core material, a step of cladding.

Step of providing a core material: the core comprising Li₁₊ₓMn_{1-y}A_{y}P_{1-z}R_{z}O₄, in which x is from -0.100 to 0.100, y is from 0.001 to 0.500, and z is from 0.001 to 0.100; A is one or more selected from Zn, Al, Na, K, Mg, Mo, W, Ti, V, Zr, Fe, Ni, Co, Ga, Sn, Sb, Nb, and Ge, optionally one or more selected from Fe, Ti, V, Ni, Co, and Mg; R is one or more selected from B, Si, N, and S.

Step of cladding: providing an MP₂O₇ powder and an XPO₄ suspension comprising a source of carbon, respectively, adding the core material, the MP₂O₇ powder to the XPO₄ suspension comprising a source of carbon, mixing, and sintering to obtain the positive electrode active material, wherein each M and X are independently one or more elements selected from Li, Fe, Ni, Mg, Co, Cu, Zn, Ti, Ag, Zr, Nb and Al; wherein the positive electrode active material has a core-shell structure comprising the core and a shell covering the core, wherein the shell comprises a first cladding layer covering the core, and a second cladding layer covering the first cladding layer, wherein the first cladding layer comprises pyrophosphate MP₂O₇ and phosphate XPO₄, and the second cladding layer comprises carbon.

The preparation methods of the present application do not specifically limit the source of the material. Optionally, the core material in the preparation method of the present application may be commercially available or may be obtained by preparation by the method of the present application. Optionally, the core material is obtained by preparation by the methods described below.

Optionally, in some embodiments, the step of providing the core material comprises the following steps (1) and (2):
step (1): dissolving a manganese source, a source of element A and an acid in a container and stirring to produce particles of a manganese salt doped with element A;
step (2): mixing the particles of the manganese salt doped with element A with a lithium source, a phosphorus source and a source of element R in a solvent to obtain a slurry, and sintering the slurry under the protection of an inert gas atmosphere to obtain lithium manganese phosphate doped with element A and element R, wherein the lithium manganese phosphate doped with element A and element R is Li₁₊ₓMn_{1-y}A_{y}P_{1-z}R_{z}O₄, in which x is from -0.100 to 0.100, y is from 0.001 to 0.500, and z is from 0.001 to 0.100; A is one or more selected from Zn, Al, Na, K, Mg, Mo, W, Ti, V, Zr, Fe, Ni, Co, Ga, Sn, Sb, Nb, and Ge, optionally one or more selected from Fe, Ti, V, Ni, Co, and Mg; R is one or more selected from B, Si, N, and S.

Optionally, step (1) proceeds at a temperature of 20-120°C, optionally 25-80°C. The stirring in the step (1) proceeds at 500-700 rpm for 60-420 minutes, optionally 120-360 minutes.

By controlling the reaction temperature, stirring speed and mixing time during doping, the doping elements can be uniformly distributed, the lattice defects can be reduced, the leaching out of manganese ions can be reduced, and the interfacial side reaction between the positive electrode active material and the non-aqueous electrolytic solution can be reduced, so that the specific capacity, the rate performance and the like of the positive electrode active material can be improved.

It is to be noted that in the present application, the source of a certain element may include one or more of an elemental substance, a sulfate, a halide, a nitrate, an organic acid salt, an oxide, or a hydroxide of the element, provided that the source can achieve the purpose of the preparation method of the present application. As an example, the source of element A is one or more selected from a elemental substance, a sulfate, a halide, a nitrate, an organic acid salt, an oxide, or a hydroxide of element A. As an example, the source of element R is one or more selected from an elemental substance, a sulfate, a halide, a nitrate, an organic acid salt, an oxide, a hydroxide, and/or an inorganic acid of element B. Optionally, the inorganic acid of element R is one or more selected from phosphoric acid, nitric acid, boric acid, metasilicic acid, and ortho-silicic acid.

Optionally, in step (1), the manganese source is one or more selected from elemental manganese, manganese dioxide, manganese phosphate, manganese oxalate, and manganese carbonate.

Optionally, the element A is iron, and optionally, in step (1), the source of iron is one or more selected from ferrous carbonate, ferric hydroxide, and ferrous sulfate.

Optionally, in step (1), the acid is one or more selected from hydrochloric acid, sulfuric acid, nitric acid, phosphoric acid, organic acids such as oxalic acid, and the like, optionally oxalic acid. In some embodiments, the acid is a diluted acid with a concentration of 60 wt% or less.

Optionally, in step (2), the lithium source is one or more selected from lithium carbonate, lithium hydroxide, lithium phosphate, and lithium dihydrogen phosphate.

Optionally, in step (2), the phosphorus source is one or more selected from diammonium hydrogen phosphate, ammonium dihydrogen phosphate, ammonium phosphate and phosphoric acid.

In some embodiments, optionally, the solvent used in the preparation method according to the present application be solvents routinely used in the art. For example, the solvent used in the preparation method according to the present application may each independently be selected from at least one of ethanol, and water (such as deionized water).

In some embodiments, optionally, in the process of preparing the manganese salt particles doped with element A, pH of the solution is controlled to be from 4 to 6. It is to be noted that the pH of the resultant mixture can be adjusted in the present application by a method commonly used in the art, for example, by adding an acid or a base.

Optionally, in some embodiments, in the step (2), the molar ratio of the manganese salt particles doped with element A to the lithium source and the phosphorus source is 1:(0.5-2.1):(0.5-2.1).

In some embodiments, optionally, the sintering conditions in step (2) are as follows: sintering at an atmosphere of inert gas or a mixture of inert gas and hydrogen at a temperature of from 600°C to 800°C for 4 hours to 10 hours. As a result, the crystallinity of the material is higher after sintering, which can improve the specific capacity, the rate performance and the like of the positive electrode active material.

Optionally, mixture of inert gas and hydrogen is a mixture of 70-90 vol% nitrogen and 10-30 vol% hydrogen.

In some embodiments, optionally, the MP₂O₇ powder is a commercially available product, or optionally, the MP₂O₇ powder is prepared by the following process: adding a source of elemental M and a source of phosphorus to a solvent to obtain a mixture, adjusting the pH of the mixture to 4-6, stirring and reacting sufficiently, and then obtaining it by drying and sintering, wherein M is one or more selected from Li, Fe, Ni, Mg, Co, Cu , Zn, Ti, Ag, Zr, Nb, and Al.

Optionally, in some embodiments, during the preparation of the MP₂O₇ powder, the drying step proceeds at 100-300°C, optionally 150-200°C for 4-8 hours.

Optionally, in some embodiments, during the preparation of the MP₂O₇ powder, the sintering step proceeds under an inert gas atmosphere for 4-10 hours at 500-800°C, optionally at 650-800°C.

In some embodiments, optionally, the XPO₄ suspension comprising a source of carbon is commercially available, or optionally, the XPO₄ suspension comprising a source of carbon is prepared by the following process: mixing a source of lithium, a source of X, a source of phosphorus, and a source of carbon homogeneously in a solvent, and then heating the reaction mixture to a temperature of 60-120°C for 2-8 hours to obtain the XPO₄ suspension comprising a source of carbon. Optionally, the pH of the mixture is adjusted to 4-6 during the preparation of the XPO₄ suspension comprising the source of carbon.

Optionally, the source of carbon is an organic carbon source and the organic carbon source is selected from one or more of starch, sucrose, glucose, polyvinyl alcohol, polyethylene glycol, and citric acid.

Optionally, in some embodiments, the mass ratio of lithium manganese phosphate doped with element A and element R (core), the MP₂O₇ powder and the XPO₄ suspension comprising the source of carbon is 1:(0.001-0.05):(0.001-0.05) in the cladding step.

Optionally, in some embodiments, the sintering temperature in the cladding step is from 500°C to 800°C and the sintering time is from 4 hours to 10 hours.

Optionally, in some embodiments, the median particle size Dv50 of the primary particles of the lithium manganese phosphate positive electrode active material according to the present application with two cladding layers is 50-2000 nm.

The positive electrode plate of the present application comprises a positive electrode current collector and a positive electrode film layer provided on at least one surface of the positive electrode current collector. In particular, the positive electrode current collector has two surfaces opposite to each other in the direction of its own thickness, and the positive electrode film layer is provided on either or both of two opposite surfaces of the positive electrode current collector. The positive electrode film layer comprises the positive electrode active material of the present application described above.

In some embodiments, optionally, the positive electrode active material is present in said positive electrode film layer in a content of 10 wt% or more, based on the total weight of the positive electrode film layer. More optionally, the positive electrode active material is present in the positive electrode film layer in a content of from 90 wt% to 99.5wt%, based on the total weight of the positive electrode film layer.

When the content of the positive electrode active material is within the above range, it is conducive to fully utilizing the advantages of the positive electrode active material of the present application.

The positive electrode film layer does not exclude other positive electrode active materials than the positive electrode active material provided by the present application. For example, in some embodiments, the positive electrode film layer may further comprise at least one of a lithium transition metal oxide and a modified compound thereof. By way of example, the other positive electrode materials may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, the positive electrode film layer optionally further comprises a positive electrode conductive agent. The present application does not specifically limit the type of said positive electrode conductive agent, and as an example, the positive electrode conductive agent includes at least one of superconducting carbon, conductive graphite, acetylene black, carbon black, Ketjen black, carbon dots, carbon nanotubes, graphene, and carbon nanofibers.

In some embodiments, said positive electrode film layer optionally further comprises a positive electrode binder. The present application does not specifically limit the type of the positive electrode binder, and as an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode current collector may be a metal foil or a composite collector fluid. As an example of a metal foil, an aluminum foil may be used. The composite collector may include a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

The positive electrode film layer is usually made by applying a positive electrode slurry to the positive collector followed by drying and cold pressing. The positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

### [Negative electrode plate]

In some embodiments, the negative electrode plate comprises a negative electrode current collector and a negative electrode film layer provided on at least one surface of the negative electrode current collector and comprising a negative electrode active material. For example, the negative electrode current collector has two surfaces opposite to each other in the direction of its own thickness, and the negative electrode film layer is provided on either or both of two opposite surfaces of the negative electrode current collector.

The negative electrode active material may be a negative electrode active material known in the art for use in secondary batteries. By way of example, the negative electrode active material includes, but is not limited to, at least one of natural graphite, artificial graphite, soft carbon, hard carbon, silicon-based material, tin-based material, and lithium titanate. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, the negative electrode film layer may optionally comprise a negative electrode conductive agent. In the present application, the type of the negative conductive agent is not particularly limited and, as an example, the negative conductive agent may include at least one of superconducting carbon, conductive graphite, acetylene black, carbon black, Ketjen black, carbon dots, carbon nanotubes, graphene, and carbon nanofibers.

In some embodiments, the negative electrode film layer may further optionally comprise a negative electrode binder. In the present application, the type of the negative electrode binder is not particularly limited and, as an example, the negative electrode binder may include at least one of styrenebutadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, the negative electrode film layer may optionally include other additives. As an example, the other additives may include thickeners, e.g., sodium carboxymethyl cellulose (CMC), and PTC thermistor material, etc.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

The negative electrode film layer is usually made by applying a negative electrode slurry to the negative electrode current collector followed by drying and cold pressing. The negative electrode slurry is usually formed by dispersing the negative electrode active material, an optional conductive agent, an optional binder, and any other optional additives in a solvent and stirring uniformly. The solvent may be N-methylpyrrolidone (NMP) and deionized water, but is not limited thereto.

The negative electrode plate does not exclude other additional functional layers than the negative electrode film layer. For example, in some embodiments, the negative electrode plate described in the present application further comprises a conductive primer (e.g. being composed of a conductive agent and a binder) sandwiched between the negative electrode current collector and the negative electrode film layer and disposed on the surface of the negative electrode current collector. In some other embodiments, the negative electrode plate described in this application further comprises a protective layer covering the surface of the negative electrode film layer.

### [Separator]

There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, the positive electrode plate, the separator, and the negative electrode plate may be made into an electrode assembly by a winding process or a stacking process.

### [Non-aqueous electrolytic solution]

The secondary battery comprises a non-aqueous electrolytic solution, which is a bridge for the passage of lithium ions in the secondary battery, takes the burden of transporting lithium ions between the positive and negative electrodes in the secondary battery, and plays a crucial role in capacity exertion, cycling performance, storage performance, and safety performance of the secondary battery.

At present, the most widely used non-aqueous electrolytic solution system commercially is a mixed carbonate solution of lithium hexafluorophosphate, but lithium hexafluorophosphate has poor thermal stability at high temperatures, and will decompose at higher temperatures to form PF₅, which has strong Lewis acidity and will decompose organic solvents by interacting with lone pairs of electrons on the oxygen atoms of organic solvents molecules; moreover, PF₅ has a high sensitivity to the trace amount of water in non-aqueous electrolytic solution, and will generate HF when it meets water, thereby increasing the acidity of non-aqueous electrolytic solution, and thus easily destroying the cladding layer on the surface of the positive electrode active material, and in particular, easily destroying the above-described first cladding layer comprising pyrophosphate and phosphate, accelerating manganese ions to leach out, and affecting the cycling performance and storage performance of the secondary battery.

The inventors have further conducted a great deal of research and skillfully added a first additive shown in Formula 1 below to the non-aqueous electrolytic solution, which is capable of being able to reduce the dissolution of the cladding layer, and thus is able to significantly improve the cycling performance and storage performance of the secondary battery.

In particular, the non-aqueous electrolytic solution according to the present application comprises a first additive comprising one or more of the compounds shown in Formula 1:

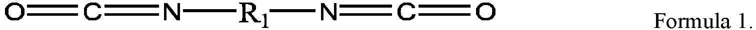

R₁ represents at least one of the group consisting of the following groups substituted or unsubstituted by Rₐ: C2~C10 divalent alkyl, C2~C10 divalent heteroalkyl, C6~C18 divalent aryl, C7~C18 divalent aryl alkyl, C7~C18 divalent alkyl aryl, C8~C18 divalent alkyl aryl alkyl, C13~C18 divalent aryl alkyl aryl, C2~C18 divalent heteroaryl, C3~C18 divalent heteroarylalkyl, C3~C18 divalent alkylheteroaryl, C4~C18 divalent alkylheteroarylalkyl, C5~C18 divalent heteroarylalkylheteroaryl, C3~C18 divalent alcyl, C4~C18 divalent alcyl alkyl, C4~C18 divalent alkyl alcyl, C5~C18 divalent alkyl alcyl alkyl, C7~C18 divalent alcyl alkyl alcyl, C2~C18 divalent heteroalcyl, C3~C18 divalent heteroalcyl alkyl, C3~C18 divalent alkyl heteroalcyl, C4~C18 divalent alkyl heteroalcyl alkyl, and C5~C18 divalent heteroalcyl alkyl heteroalcyl.

Rₐ comprises one or more selected from halogen atoms, -CN, -NCO, -OH, -COOH, -SOOH, carboxylate group, sulfonate group, sulfate group, C1~C10 alkyl, C2~C10 alkenyl, C2~C10 alkynyl, C2~C10 oxoalkyl, phenyl, and benzyl. Optionally, the halogen atom comprises one or more selected from a fluorine atom, a chlorine atom, a bromine atom. More optionally, the halogen atom is selected from a fluorine atom.

When the non-aqueous electrolytic solution comprises the first additive shown in Formula 1 above, the first additive can react with a trace amount of water in the non-aqueous electrolytic solution to form -NHCOOH, reduce the generation of HF, reduce the acidity of the non-aqueous electrolytic solution, and thereby reduce the dissolution of the cladding layer, the leaching out of manganese ions, and the generation of gas. At the same time, the first additive shown in Formula 1 is also capable of generating a uniform and dense interfacial film on the surface of the negative electrode active material, reducing the reduction reaction of the leached-out manganese ions at the negative electrode. As a result, when the non-aqueous electrolytic solution contains the first additive shown in the above Formula 1, the cycling performance and the storage performance of the secondary battery can be significantly improved, and in particular, the high-temperature cycling performance and the high-temperature storage performance of the secondary battery can be significantly improved.

In some embodiments of the present application, R₁ represents at least one of the group consisting of the following groups substituted or unsubstituted by Rₐ: C2~C10 alkylidene, C2~C10 oxoalkylidene, C2~C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m-cyclopentyldimethylene, p- cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene. Optionally, Rₐ comprises one or more selected from a fluorine atom, -CN, -NCO, -OH, -COOH, -SOOH, carboxylate group, sulfonate group, sulfate group, C1~C10 alkyl, C2~C10 alkenyl, C2~C10 alkynyl, C2~C10 oxoalkyl, phenyl and benzyl.

When R₁ represents the above substituent group, it is capable of further reducing the generation of HF and lowering the acidity of the non-aqueous electrolytic solution, and at the same time helping to generate a uniform, dense interfacial film with low impedance on the surface of the negative electrode active material, whereby the improvement effect on the cycling performance and the storage performance of the secondary battery can be further enhanced.

In some embodiments of the present application, the first additive comprises at least one of the following compounds:

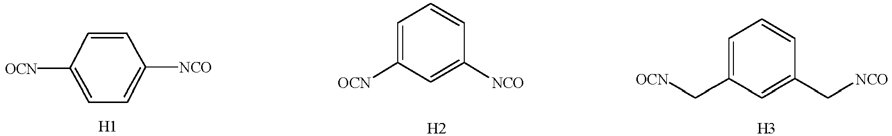

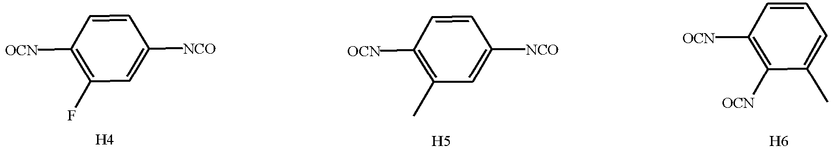

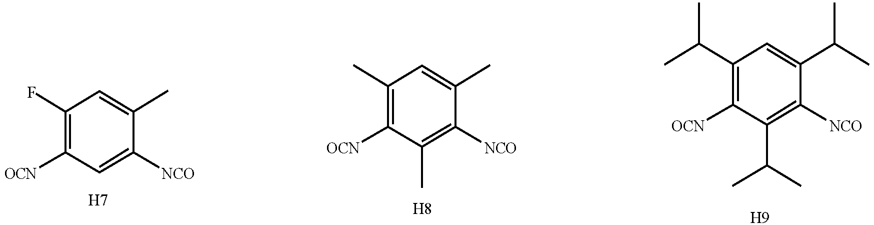

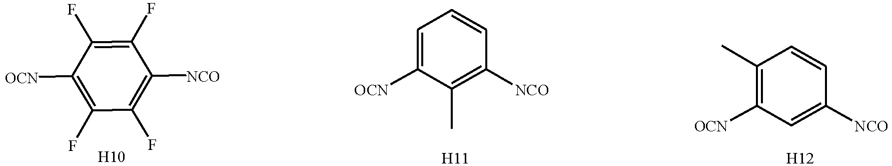

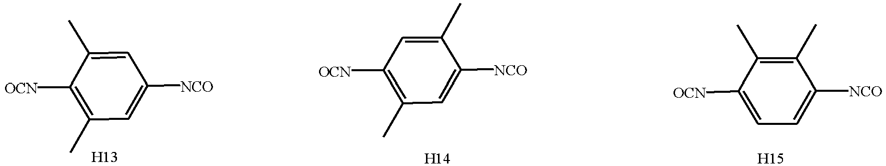

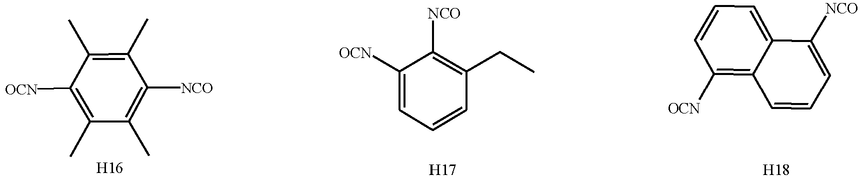

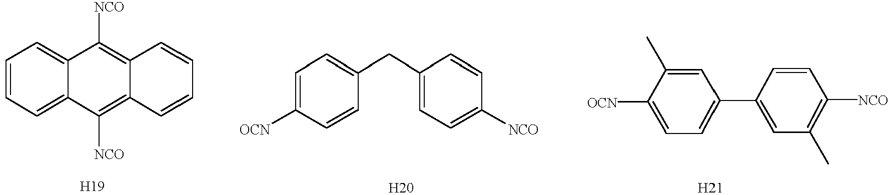

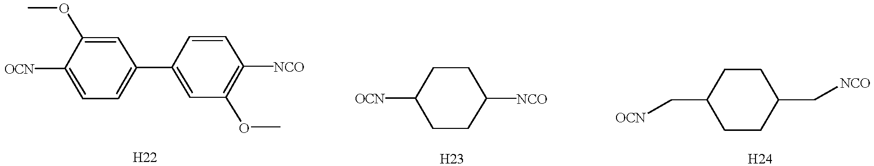

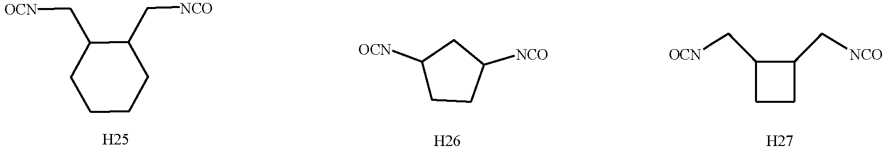

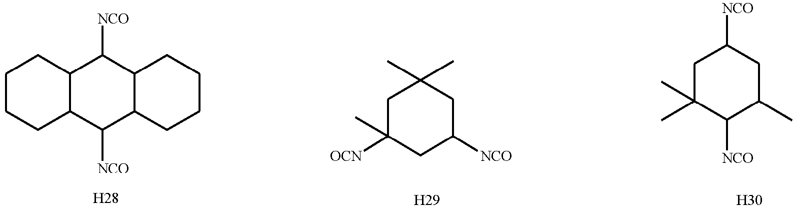

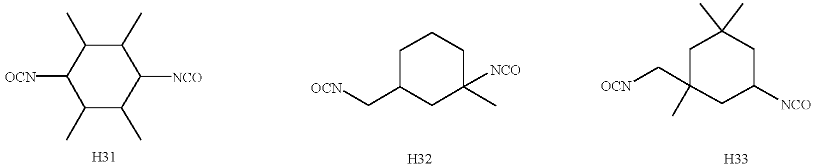

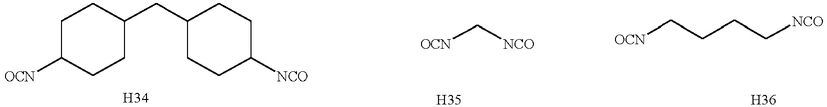

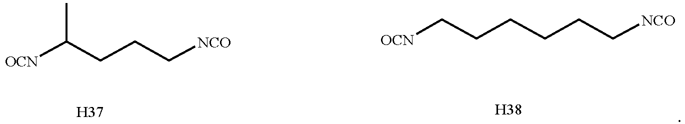

The inventors found in the course of their research that using at least one of the above compounds H1 to H38 as a first additive can further reduce the generation of HF and lower the acidity of the non-aqueous electrolytic solution, and at the same time help to generate a uniform and dense interfacial film with low impedance on the surface of the negative electrode active material, whereby the effect of improving the cycling performance and storage performance of the secondary battery can be further enhanced.

The inventor also found that when the non-aqueous electrolytic solution contains too much of the first additive, interfacial impedance on the negative electrode will increase, and capacity exertion and rate performance of the secondary battery will be affected. Therefore, the content of the first additive in the non-aqueous electrolytic solution should not be too high. In some embodiments, the content of the first additive is W1% by weight, W1 being from 0.01 to 20, optionally from 0.1 to 10, and more optionally from 0.3 to 5, based on the total weight of the non-aqueous electrolytic solution. When the first additive content is within the above range, it can reduce the generation of HF and lower the acidity of the non-aqueous electrolytic solution without deteriorating the negative electrode interfacial impedance, which in turn can significantly improve the cycling performance and the storage performance of the secondary battery without affecting the capacity exertion and the rate performance of the secondary battery.

In some embodiments, the first cladding layer is applied in an amount of C1% by weight, the second cladding layer is applied in an amount of C2% by weight, and the first additive is present in a content of W1% by weight, which satisfy the relationship of W1/(C1+C2) of from 0.001 to 2. Optionally, W1/(C1+C2) is from 0.01 to 2, from 0.01 to 1.5, from 0.01 to 1.5, from 0.05 to 1.5, from 0.05 to 1, or from 0.1 to 1. When W1/(C1+C2) is within the above suitable ranges, it can significantly enhance the improvement effect on the cycling performance and storage performance of the secondary battery, and at the same time improve the capacity exertion and rate performance of the secondary battery. In addition, it can effectively avoid the following situations: when W1/(C1+C2) is small, there is no enough first additive to reduce the generation of HF and reduce the acidity of the non-aqueous electrolytic solution, which cannot significantly reduce the leaching out of manganese ions and the generation of gases, so that the further improvement of the cycling performance and storage performance of the secondary battery is not significant; when W1/(C1+C2) is large, the negative electrode interface resistance increases, which affects the capacity performance of the secondary battery. When W1/(C1+C2) is larger, the negative electrode interfacial impedance increases, affecting the capacity exertion and rate performance of the secondary battery.

In some embodiments, the non-aqueous electrolytic solution further comprises a second additive, the second additive comprising one or more of ethylene sulfate (DTD), lithium difluorophosphate (LiPO₂F₂), bisoxalatodifluorophosphate, R₂[FSO₃⁻]ₐ, and R₂[C_{b}F_{2b+1}SO₃⁻]ₐ, a being an integer from 1 to 5 and b being an integer from 1 to 6, and R₂ representing a metal cation or an organic group cation.

The second additive contributes to the formation of a low-impedance interfacial film on the surface of the negative electrode active material, thereby improving the capacity exertion and rate performance of the secondary battery. Thus, when the non-aqueous electrolytic solution contains both the first additive and the second additive, it helps to significantly improve the cycling performance and storage performance of the secondary battery, while enhancing the capacity exertion and rate performance of the secondary battery.
a represents the average valence of a metal cation or an organic group cation R₂. b represents an integer from 1 to 6, e.g., b represent 1, 2, 3, 4, 5, or 6; optionally, b represents 1, 2, or 3.

Optionally, the metal cation comprises one or more selected from Li⁺, Na+, K , Rb⁺, Cs⁺, Mg²⁺, Ca²⁺, Ba²⁺, Al³⁺, Fe²⁺, Fe³⁺, Cu²⁺, Ni²⁺ and Ni³⁺.

Optionally, the organic group cation comprises one or more selected from NH₄⁺, N(CH₃)₄⁺, and N(CH₂CH₃)₄⁺.

Optionally, R₂[FSO₃⁻]a represents lithium fluorosulfonate LiFSOs.

Optionally, R₂[C_{b}F_{2b+1}SO₃⁻]a represents lithium trifluoromethanesulfonate LiCF₃SO₃.

The inventors also found in the course of the research that when the non-aqueous electrolytic solution contains an excessive amount of the second additive, its lowering effect on the negative electrode interfacial impedance does not further increase, while the viscosity and conductivity of the non-aqueous electrolytic solution may be affected, and thus the capacity exertion and rate performance of the secondary battery may also be affected. Therefore, the content of the second additive in the non-aqueous electrolytic solution should not be excessive. In some embodiments, the content of the second additive is W2% by weight, W2 being from 0.01 to 20, optionally from 0.1 to 10, more optionally from 0.3 to 5, based on the total weight of the non-aqueous electrolytic solution. When the second additive content is in a suitable range, it can effectively improve the capacity exertion and rate performance of the secondary battery.

The inventors have also found in the course of their research that the ratio of the content of the first additive (W1 wt%), to the content of the second additive (W2 wt%), also affects the electrochemical performance of the secondary battery. In some embodiments, W1/W2 is from 0.01 to 20. Optionally, W1/W2 is from 0.01 to 10, from 0.1 to 10, from 0.1 to 8, from 0.1 to 5, from 0.2 to 5, from 0.5 to 5, or from 1 to 5. When W1/W2 is in a suitable range, the synergistic effect of the two additive can be better utilized, whereby the effect of improving the cycling performance and storage performance of the secondary battery can be further enhanced, and at the same time enhance the capacity exertion and rate performance of the secondary battery. The following can be effectively avoided: when W1/W2 is large, the second additive cannot effectively reduce the negative electrode interfacial impedance, and the further improvement effect on the capacity and rate performance of the secondary battery may not be significant; when W1/W2 is small, the generation of HF cannot be significantly reduced and the acidity of the non-aqueous electrolytic solution cannot be reduced, and the improvement effect on the cycling performance and storage performance of the secondary battery may not be significant.

In some embodiments, the non-aqueous electrolytic solution further comprises a third additive, the third additive comprising one or more of a cyclic carbonate compound containing an unsaturated bond, a halogen-substituted cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound. When the non-aqueous electrolytic solution comprises both the first additive and the third additive or comprises the first additive, the second additive and the third additive at the same time, the third additive helps to form a more dense and stable interfacial film on the surface of the positive electrode and/or negative electrode active materials, so as to be able to further enhance at least one of cycling performance, storage performance, and rate performance of secondary batteries. In some embodiments, the third additive is present in a content of W3% by weight, with W3 being from 0.01 to 10, optionally from 0.1 to 10, more optionally from 0.3 to 5, based on the total weight of the non-aqueous electrolytic solution.

The present application does not specifically limit the type of the third additive as long as it does not detract from the main idea of the present application, e.g., the third additive may be selected in any ratio from the specific substances described below.

### (a) Cyclic carbonate compound containing carbon-carbon unsaturated bonds

The cyclic carbonate compound containing carbon-carbon unsaturated bonds may comprise one or more of the compounds shown in Formula 2-1. R₃ represents C1-C6 alkylene group with alkenyl or alkynyl substituents on its branched chain, or a substituted or unsubstituted C2-C6 straight-chain alkenylene group, wherein the substituent is one or more selected from a halogen atom, C1 -C6 alkyl group, and a C2-C6 alkenyl group.

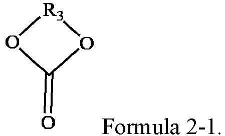

Optionally, the cyclic carbonate compound containing a carbon-carbon unsaturated bond may include, but is not limited to, one or more of the following compounds.

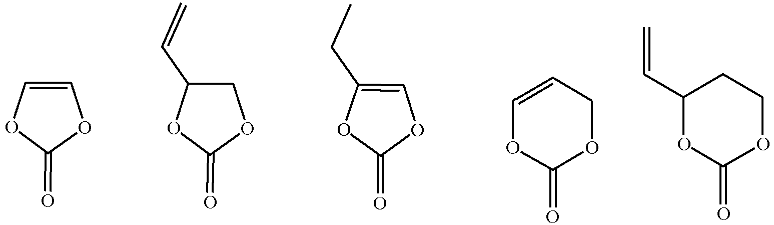

### (b) Halogen-substituted cyclic carbonate compound

The halogen-substituted cyclic carbonate compound may include one or more of the compounds shown in Formula 2-2. R₄ represents a halogen-substituted C1-C6 alkylene group, or a halogen-substituted C2-C6 alkenylene group.

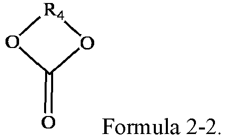

Optionally, the halogen-substituted cyclic carbonate compound may include, without being limited to, one or more of fluoro ethylene carbonate (FEC), fluoro propylene carbonate (FPC), trifluoro propylene carbonate (TFPC), and trans or cis-4,5-difluoro-1,3-dioxolan-2-one (hereinafter, both are collectively referred to as DFEC).

### (c) Sulfate compound

The sulfate compound may be a cyclic sulfate compound other than ethylene sulfate (DTD). The other cyclic sulfate compounds may include one or more of the compounds shown in Formulae 2-3. R₅ represents a substituted or unsubstituted C1~C6 alkylene, a substituted or unsubstituted C2~C6 alkenylene group, wherein the substituent group is selected from one or more of a halogen atom, a C1~C3 alkyl group, and a C2~C4 alkenyl group.

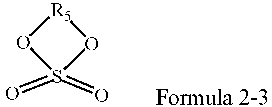

Optionally, the sulfate compound may comprise one or more of the following compounds, but not limited thereto:

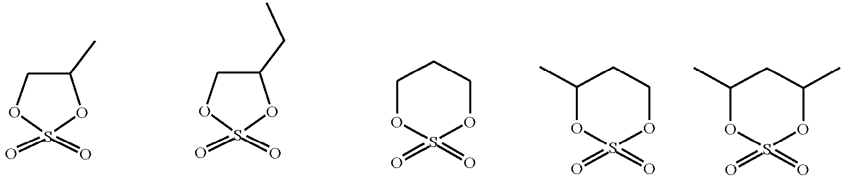

Further optionally, the sulfate compound comprises one or more of ethylene trimethylene sulfite (abbreviated as TMS), and propylene sulfate (abbreviated as PLS).

### (d) Sulfite compound

The sulfite compound may be a cyclic sulfite compound, and specifically may include one or more of the compounds shown in Formulas 2-4. R₆₉ represents substituted or unsubstituted C1-C6 alkylene, substituted or unsubstituted C2-C6 alkenylene, wherein the substituent is one or more selected from a halogen atom, C1-C3 alkylene, and C2-C4 alkenylene.

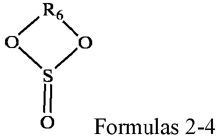

Optionally, the sulfite compound may include one or more of ethylene sulfite (ES), propylene sulfite (PS), butylene sulfite (BS).

### (e) Sultone compound

The sultone compound is selected from one or more of the compounds represented by Formula 2-5, and in Formula 2-5, R₇ is selected from one or more of a substituted or unsubstituted C₁-C₆ alkylene group and a substituted or unsubstituted C₂-C₆ alkenylene group, wherein the substituent is selected from one or more of a halogen atom, a C₁-C₃ alkyl group, and a C₂-C₄ alkenyl group.

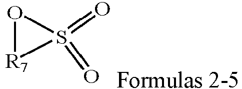

Optionally , the sultone compound may comprise one or more of the following compounds, but not limited thereto:

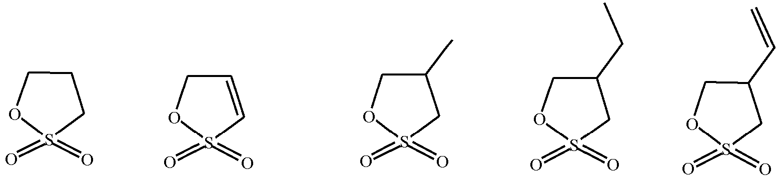

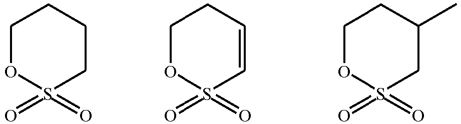

Further optionally, the sultone compound may comprise one or more of 1,3-propane sultone (abbreviated as PS) and 1,3-propene sultone (abbreviated as PES).

### (f) Disulfonate compound

The disulfonate compound is a compound containing two sulfonic acid groups (-S(=O)₂O-). Optionally, the disulfonate compound is a methylene disulfonate compound.

The methylene disulfonate compound may comprise one or more of the compounds represented by Formula 2-6. R₈, R₉, R₁₀ and R₁₁ are each independently selected from one or more of a hydrogen atom, a halogen atom, a substituted or unsubstituted C₁-C₁₀ alkyl group, and a substituted or unsubstituted C₂-C₁₀ alkenyl group, wherein the substituent is selected from one or more of a halogen atom, a C₁-C₃ alkyl group, and a C₂-C₄ alkenyl group.

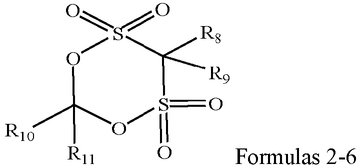

Optionally , the disulfonate compound may comprise one or more of the following compounds, but not limited thereto:

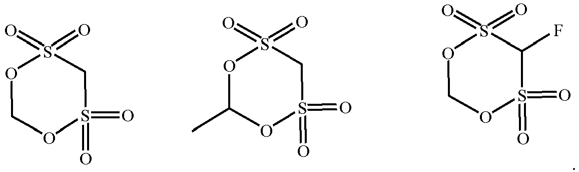

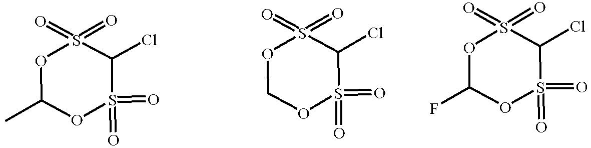

Further optionally, the disulfonate compound may be methylene methanedisulfonate.

### (g) Nitrile compound

The nitrile compound may be a dinitrile or trinitrile compound. Optionally, the nitrile compound may comprise one or more of the compounds shown in Formulae 2-7 and Formulae 2-8. R₁₂ represents substituted or unsubstituted C1-C12 alkylene, substituted or unsubstituted C1-C12 oxa-alkylene, substituted or unsubstituted C2-C12 alkenylene, or substituted or unsubstituted C2-C12 alkynylene, and R₁₃ to R₁₅ each independently represent, substituted or unsubstituted C0-C12 alkylene, substituted or unsubstituted C1-C12 oxa-alkylene, substituted or unsubstituted C2-C12 alkenylene, or substituted or unsubstituted C2-C12 alkynylene, wherein the substituent is one or more selected from a halogen atom, a nitrile group, C1-C6 alkyl, C2-C6 alkenyl, and C1-C6 alkoxy.

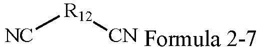

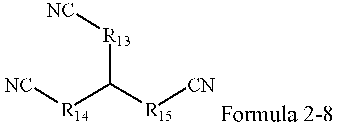

Optionally, the nitrile compound may include one or more of ethanedinitrile, propanedinitrile, butanedinitrile, pentanedinitrile, hexanedinitrile, heptanedinitrile, octanedinitrile, nonanedinitrile, decanedinitrile, undecanedinitrile, dodecanedinitrile, tetramethylsuccinonitrile, methylpentanedinitrile, butadienedinitrile, 2-pentenedinitrile, hex-2-enedinitrile, hex-3-enedinitrile, oct-4-enedinitrile, oct-4-ynedinitrile, 1,2,3-propane-tricarbonitrile, 1,3,5-pentanetricarbonitrile, and 1,3,6-hexanetrinitrile.

### (h) Phosphonitrile compound

The phosphonitrile compound may be a cyclic phosphonitrile compound. The cyclic phosphonitrile compound may include one or more of methoxy pentafluorocyclotriphosphonitrile, ethoxy pentafluorocyclotriphosphonitrile, phenoxy pentafluorocyclotriphosphonitrile, and ethoxy heptafluorocyclotetraphosphonitrile. Optionally, the cyclic phosphonitrile compound may include one or more of methoxy pentafluorocyclotriphosphonitrile, ethoxy pentafluorocyclotriphosphonitrile, phenoxy pentafluorocyclotriphosphonitrile. Further optionally, the cyclic phosphonitrile compound may include methoxy pentafluorocyclotriphosphonitrile, ethoxy pentafluorocyclotriphosphonitrile, or a combination thereof.

### (i) Aromatic hydrocarbon and halogenated aromatic hydrocarbon compound

The aromatic hydrocarbon and halogenated aromatic hydrocarbon compound may include one or more of cyclohexylbenzene, fluorinated cyclohexylbenzene compounds (e.g., 1-fluoro-2-cyclohexylbenzene, 1-fluoro-3-cyclohexylbenzene, 1-fluoro-4-cyclohexylbenzene), t-butylbenzene, t-amylbenzene, 1-fluoro-4-t-butylbenzene, biphenyl, terphenyl (ortho-, meta-, para-), diphenyl ether, fluorobenzene, difluorobenzene (ortho-, meta-, para-), anisole, 2,4-difluoroanisole, partial hydrides of terphenyl (e.g., 1,2-dicyclohexylbenzene, 2-phenylbicyclohexyl, 1,2-diphenylcyclohexane, o-cyclohexylbiphenyl). Optionally, the aromatic hydrocarbon and halogenated aromatic hydrocarbon compound may include one or more of biphenyl, terphenyl (ortho-, meta-, para-), fluorobenzene, cyclohexylbenzene, t-butylbenzene, t-amylbenzene. Further optionally, the aromatic hydrocarbon and halogenated aromatic hydrocarbon compound may include one or more of biphenyl, o-terphenyl, fluorobenzene, cyclohexylbenzene, and tert-pentylbenzene.

### (j) Acid anhydride compound

The acid anhydride compound may be a chain acid anhydride or a cyclic acid anhydride. Specifically, the acid anhydride compound may include one or more of acetic anhydride, propionic anhydride, succinic anhydride, maleic anhydride, 2-allyl succinic anhydride, glutaric anhydride, itaconic anhydride, and 3-sulfo-propionic anhydride. Optionally, the acid anhydride compound may include one or more of succinic anhydride, maleic anhydride, and 2-allyl succinic anhydride. Further optionally, the acid anhydride compound may include succinic anhydride, 2-allyl succinic anhydride, or a combination thereof.

### (k) Phosphite compound

The phosphite compound may be a silane phosphite compound, and specifically may include one or more of the compounds shown in Formulae 2-9, with R₁₆ to R₂₄ each independently representing halogen-substituted or unsubstituted C1-C6 alkyl.

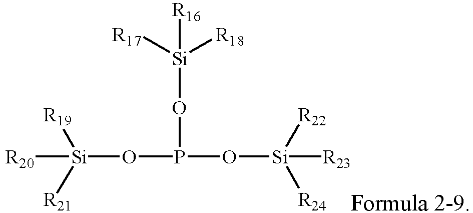

Optionally, the silane phosphite compound may include, but is not limited to, one or more of the following compounds.

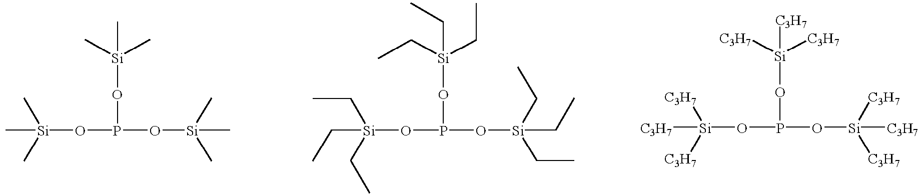

### (l) Phosphate compound

The phosphate compound may be a silane phosphate compound, and specifically may include one or more of the compounds shown in Formula 2-10, with R₂₅ to R₃₃ each independently representing halogen-substituted or unsubstituted C1-C6 alkyl.

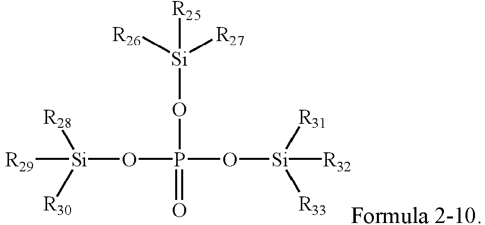

Optionally, the silane phosphate compound may include, but is not limited to, one or more of the following compounds.

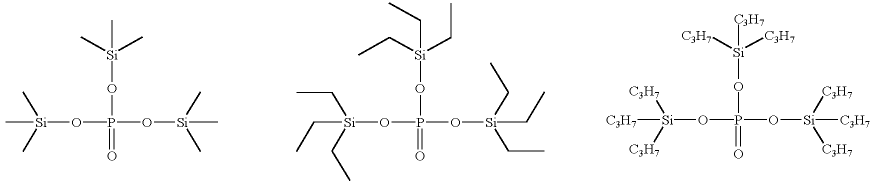

### (m) Borate compound

The borate compound may be a silane borate compound, and specifically may include one or more of the compounds shown in Formula 2-11, with R₃₄ to R₆₈ each independently denoting halogen-substituted or unsubstituted C1-C6 alkyl.

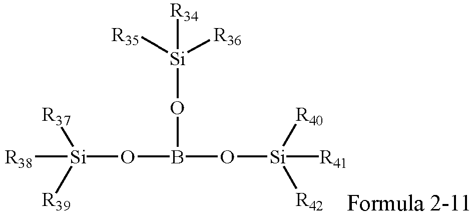

Optionally, the silane borate compound may include, but is not limited to, one or more of the following compounds:

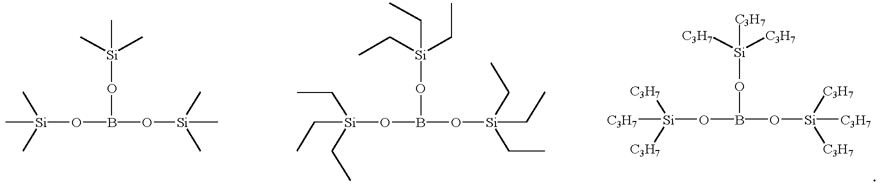

In some embodiments, optionally, the third additive may comprise one or more of vinylidene carbonate (VC), vinyl ethylene carbonate (VEC), and fluoroethylene carbonate (FEC). These third additives are electrochemical reduction additives, and their reduction potential is higher than that of an organic solvent, so that electrochemical reduction can preferentially occur on the surface of the negative electrode active materials to form an interfacial membrane with excellent performances, thereby reducing destruction of the interfacial membrane by the organic solvent, and thus the secondary battery adopting the same can have better electrochemical performance and safety performance.

The non-aqueous electrolytic solution further comprises a lithium salt and an organic solvent. The present application has no particular limitation on the types of the lithium salt and the organic solvent, which may be selected according to actual needs.

As an example, the organic solvent may include one or more of chain carbonate, cyclic carbonate, carboxylic acid ester. Among them, the present application has no specific limitation on the types of said chain carbonate, said cyclic carbonate, and said carboxylic acid ester, which can be selected according to actual needs. Optionally, said organic solvent includes one or more of dimethyl carbonate (DMC), diethyl carbonate (DEC), dipropyl carbonate (DPC), methyl ethyl carbonate (EMC), methyl propyl carbonate (MPC), ethyl propyl carbonate (EPC), ethylene carbonate (EC), propylene carbonate (PC), butylene carbonate (BC), gamma-butyrolactone (GBL), methyl formate (MF), ethyl formate (EF), methyl acetate (MA), ethyl acetate (EA), propyl acetate (PA), methyl propionate (MP), ethyl propionate (EP), propyl propionate (PP), and tetrahydrofuran (THF).

As an example, said lithium salt may include one or more of LiN(CₘF₂ₘ₊₁SO₂)(CₙF₂ₙ₊₁SO₂), LiPF₆, LiBF₄, LiBOB, LiAsF₆, Li(FSO₂)₂N, LiCF₃SO₃, and LiClO₄, with m and n being natural numbers. When the non-aqueous electrolytic solution includes the lithium salt described above, this helps to form a dense, stable and low-impedance interfacial film on the surface of the positive electrode and/or negative electrode active materials, and effectively improves at least one of cycling performance, storage performance and rate performance of the secondary battery.

The cyclic carbonate has a higher dielectric constant, which facilitates dissociation of lithium salts. In some embodiments, said cyclic carbonate may be present in a content of 20 wt% or more, optionally from 20 wt% to 80 wt%, more optionally from 20 wt% to 50 wt%, based on the total weight of said organic solvent. Optionally, the cyclic carbonate includes one or more of ethylene carbonate (EC), propylene carbonate (PC), and butylene carbonate (BC).

The chain carbonate has a smaller dielectric constant and a weaker ability to dissociate lithium salts, but has a low viscosity and good fluidity and thus it can increase migration rate of lithium ions. In some embodiments, the chain carbonate may be present in a content of 10 wt% or more, optionally from 10 wt% to 80 wt%, based on the total weight of the organic solvent. Optionally, the chain carbonate comprises one or more of dimethyl carbonate (DMC), diethyl carbonate (DEC), dipropyl carbonate (DPC), methyl ethyl carbonate (EMC), methyl propyl carbonate (MPC), and ethyl propyl carbonate (EPC).

Carboxylic acid esters have advantages of low viscosity and high dielectric constant and thus it may enhance conductivity of a non-aqueous electrolytic solution. In some embodiments, said carboxylic acid ester may be present in a content of from 0 wt% to 70 wt%, optionally from 0 wt% to 60 wt%, based on the total weight of said organic solvent. Optionally, the carboxylic acid ester comprises one or more of methyl formate (MF), ethyl formate (EF), methyl acetate (MA), ethyl acetate (EA), propyl acetate (PA), methyl propionate (MP), ethyl propionate (EP), and propyl propionate (PP).

With increasing the content of lithium salts, the total number of mobile lithium ions increases, but at the same time, viscosity of the non-aqueous electrolytic solution will also increase, and migration rate of lithium ions slows down instead. Thus, an optimal value for the content of lithium salts occurs. In some embodiments, said lithium salt may be present in a content of from 6 wt% to 39 wt%, optionally from 10 wt% to 31 wt%, more optionally from 11 wt% to 24 wt%, still more optionally from 12 wt% to 20 wt%, based on the total weight of the non-aqueous electrolytic solution.

The non-aqueous electrolytic solution of the present application can be prepared in accordance with conventional methods in the field. For example, the additives, the organic solvent, the lithium salt and the like can be mixed well to obtain a non-aqueous electrolytic solution. There is no particular limitation on the order of addition of each material. For example, the additives, the lithium salt and the like can be added to the organic solvent and mixed homogeneously to obtain a non-aqueous electrolytic solution.

In the present application, components and their contents in the non-aqueous electrolytic solution can be determined according to methods conventional in the art. For example, they can be determined by gas chromatography-mass spectrometry (GC-MS), ion chromatography (IC), liquid chromatography (LC), nuclear magnetic resonance spectrometry (NMR) and the like.

It should be noted that the non-aqueous electrolytic solution of the present application can also be obtained from a secondary battery. An exemplary method of obtaining a non-aqueous electrolytic solution from a secondary battery comprises the step of discharging the secondary battery to a discharge cut-off voltage and then centrifuging it, after which an appropriate amount of liquid obtained from centrifugation is taken for testing.

### [Outer package]

In some embodiments, the secondary battery may include an outer package. The outer package may be used to encapsulate the electrode assembly and the non-aqueous electrolytic solution.

In some embodiments, the outer package of said secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

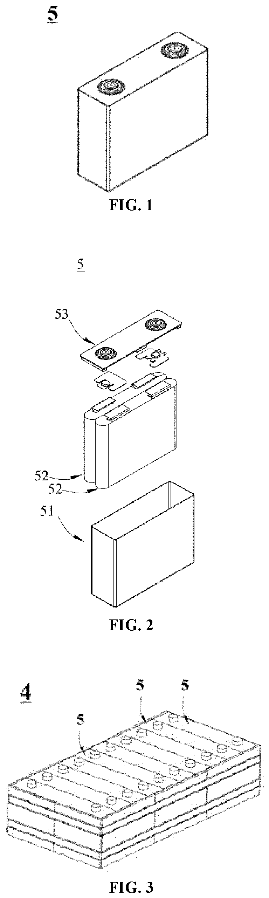

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or more, and may be adjusted according to requirements.

A process for preparing the secondary battery of the present application is well known in the art. In some embodiments, a positive electrode plate, a separator, a negative electrode plate and a non-aqueous electrolytic solution may be assembled into a secondary battery. As an example, a positive electrode plate, a separator, and a negative electrode plate can be made into an electrode assembly by a winding process or a stacking process, and the electrode assembly can be placed in an outer package and is subjected to drying, to which a non-aqueous electrolytic solution is injected. After vacuum encapsulation, resting, chemical formation, and shaping process, a secondary battery can be obtained.

### Battery Module

In some embodiments, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

### Battery pack

In some embodiments, the above-mentioned battery modules can also be assembled into a battery pack, and the number of battery modules included in the battery pack can be adjusted according to the application and capacity of the battery pack.

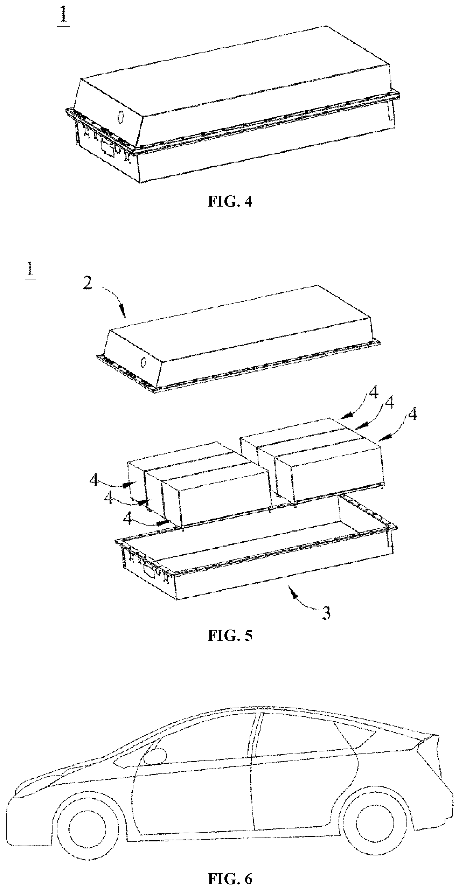

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

The present application further provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

The sources of raw materials involved in examples of the present application are as follows:

| Name | Chemical Formula | Supplier | Specification |
|---|---|---|---|
| Manganese Carbonate | MnCO₃ | Shandong West Asia Chemical Industry Co. | 1Kg |
| Lithium Carbonate | Li₂CO₃ | Shandong West Asia Chemical Industry Co. | 1Kg |
| Magnesium carbonate | MgCO₃ | Shandong West Asia Chemical Industry Co. | 1Kg |
| Zinc Carbonate | ZnCO₃ | Wuhan Xinru Chemical Co. | 25Kg |
| Ferrous Carbonate | FeCO₃ | Xi'an Lanzhiguang Fine Material Co. | 1Kg |
| Nickel Sulfate | NiCO₃ | Shandong West Asia Chemical Industry Co. | 1Kg |
| Titanium Sulfate | Ti(SO₄)₂ | Shandong West Asia Chemical Industry Co. | 1Kg |
| Cobalt Sulfate | CoSO₄ | Xiamen Zhixin Chemical Co. | 500g |
| Vanadium Dichloride | VCl₂ | Shanghai Jin Jin Le Industry Co. | 1Kg |
| Oxalic acid dihydrate | C₂H₂O₄^{•}2H₂O | Shanghai Jin Jin Le Industry Co. | 1Kg |
| Ammonium dihydrogen phosphate | NH₄H₂PO₄ | Shanghai Chengshao Biotechnology Co. | 500g |
| Sucrose | C₁₂H₂₂O₁₁ | Shanghai Yuanye Biotechnology Co. | 100g |
| Sulfuric acid | H₂SO₄ | Shenzhen Haisian Biotechnology Co. | In a mass |
| | | | percentage of 60% |
| Nitric acid | HNO₃ | Anhui Lingtian Fine Chemical Co. | In a mass percentage of 60% |
| Metasilicic acid | H₂SiO₃ | Shanghai Yuanye Biotechnology Co. | 100g |
| Boric acid | H₃BO₃ | Changzhou Qidi Chemical Co. | 1Kg |

### Example 1-1

### Preparation of positive electrode active materials

### (1) Preparation of co-doped lithium manganese phosphate core

Preparation of Fe, Co and V co-doped manganese oxalate: 689.5 g of manganese carbonate (as MnCOs, hereinafter the same), 455.2 g of ferrous carbonate (as FeCO₃, hereinafter the same), 4.6 g of cobalt sulphate (as CoSO₄, hereinafter the same), and 4.9 g of vanadium dichloride (as VCl₂, hereinafter the same) were thoroughly mixed for 6 hours in a mixer. The mixture was transferred to a reactor to which 5 liters of deionized water and 1260.6 g of oxalic acid dihydrate (as C₂H₂O₄.2H₂O, hereinafter the same) were added. The reaction kettle was heated to 80°C and the content was stirred at 600 rpm for 6 hours until the reaction was terminated (no bubbles were generated) to obtain a Fe, Co, V and S co-doped manganese oxalate suspension. The suspension was then filtered and the filter cake was dried at 120°C, after which it was milled to obtain Fe, Co and V co-doped manganese oxalate dihydrate particles with a median particle size Dv50 of 100 nm.

Preparation of Fe, Co, V and S co-doped lithium manganese phosphate: the manganese oxalate dihydrate particles (1793.4 g) obtained in the previous step, 369.0 g of lithium carbonate (as Li₂CO₃, hereinafter the same), 1.6 g of dilute sulfuric acid (as 60% H₂SO₄, hereinafter the same) at a concentration of 60% and 1148.9 g of ammonium dihydrogen phosphate (as NH₄H₂PO₄, hereinafter the same) were added to 20 liters of deionized water, and the mixture was stirred for 10 hours to homogenize the mixture to obtain a slurry. The slurry was transferred to a spray drying apparatus for spray drying and granulation with a drying temperature set at 250°C for 4 hours to obtain powder. In a protective atmosphere of nitrogen (90 vol%) + hydrogen (10 vol%), the said powder was sintered at 700°C for 4 hours to obtain 1572.1 g of Fe, Co, V and S co-doped lithium manganese phosphate.

### (2) Preparation of lithium iron pyrophosphate and lithium iron phosphate

Preparation of lithium iron pyrophosphate powder: 4.77 g of lithium carbonate, 7.47 g of ferrous carbonate, 14.84 g of ammonium dihydrogen phosphate and 1.3 g of oxalic acid dihydrate were dissolved in 50 mL of deionized water. The mixture had a pH of 5. The reaction mixture was allowed to fully react with stirring for 2 hours. The reacted solution was then warmed to 80°C and maintained at that temperature for 4 h to obtain a suspension comprising Li₂FeP₂O₇. The suspension was filtered, and the resulting filter cake was washed with deionized water and dried at 120°C for 4 h to obtain powder. The said powder was sintered at 650°C under nitrogen atmosphere for 8 hours and subjected to milling after it was naturally cooled to room temperature, thereby obtaining Li₂FeP₂O₇ powder.

Preparation of lithium iron phosphate suspension: 11.1 g of lithium carbonate, 34.8 g of ferrous carbonate, 34.5 g of ammonium dihydrogen phosphate, 1.3 g of oxalic acid dihydrate, and 74.6 g of sucrose (as C₁₂H₂₂O₁₁, hereinafter the same) were dissolved in 150 mL of deionized water to obtain a mixture. The reaction mixture was allowed to fully react with stirring for 6 hours. The reacted solution was then warmed to 120°C and maintained at that temperature for 6 hours to obtain a suspension containing LiFePO₄.

### (3) Cladding

1572.1 g of the above Fe, Co, V and S co-doped lithium manganese phosphate and 15.72 g of the above lithium iron pyrophosphate (Li₂FeP₂O₇) powder were added to the lithium iron phosphate (LiFePO₄) suspension prepared in the previous step, which was mixed well by stirring and then transferred to a vacuum oven to be dried for 6 hrs at 150°C. The resulting product was then dispersed by sand milling. After dispersion, the obtained product was sintered in a nitrogen atmosphere at 700°C for 6 hours to obtain the target product of lithium manganese phosphate with two cladding layers.

### Preparation of positive electrode plate

The lithium manganese phosphate positive electrode active material with two cladding layers prepared above, acetylene black as a conductive agent, and polyvinylidene fluoride (PVDF) as a binder were added to N-methylpyrrolidone (NMP) at a weight ratio of 92:2.5:5.5 with stirring until these materials were mixed homogeneously to obtain a positive electrode slurry. The positive electrode slurry was then uniformly applied to an aluminum foil at 0.280 g/1540.25 mm², and then dried, cold pressed, and slit to obtain a positive electrode plate.

### Preparation of negative electrode plate

Artificial graphite as a negative electrode active material, hard carbon, acetylene black as a conductive agent, styrene butadiene rubber (SBR) as a binder, sodium carboxymethyl cellulose (CMC) as a thickener at a weight ratio of 90:5:2:2:1 were dissolved in a solvent deionized water, which was stirred and mixed well to prepare a negative electrode slurry. The negative electrode slurry was uniformly applied to a copper foil as a current collector at 0.117 g/1540.25 mm², and then dried, cold pressed, and slit to obtain a negative electrode plate.

### Preparation of non-aqueous electrolytic solution

In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H38 were dissolved, and the resulting mixture was stirred homogeneously, to obtain a non-aqueous electrolytic solution.

### Separator

A commercially available PP-PE copolymer microporous film with a thickness of 20 µm and an average pore size of 80 nm was used (from Trico Electronic Technology, model 20).

### Preparation of full battery

The positive electrode plate, separator and negative electrode plate were stacked in order, so that the separator was sandwiched between the positive and negative electrodes for isolation, and then they were wound to form an electrode assembly. The electrode assembly was placed in an outer package, filled with the above electrolytic solution, and encapsulated to obtain a full battery (hereinafter also referred to as "full battery").

### Preparation of button battery

The lithium manganese phosphate positive electrode active material with two cladding layers prepared above, PVDF, and acetylene black were added to NMP at a weight ratio of 90: 5: 5 and stirred in a drying room to make a slurry. The above slurry was applied to an aluminum foil, dried and cold pressed to form a positive electrode plate. The applied amount was 0.2g/cm² and the compaction density was 2.0g/cm³.

Lithium plate was used as a negative electrode, it was assembled together with the above prepared positive electrode plate and the non-aqueous electrolytic solution in a button battery box to form a button battery (hereinafter also referred to as "button").

Examples 1-2 to 1-33 were the same as Example 1-1 in terms of the preparation of positive electrode plate, preparation of negative electrode plate, preparation of non-aqueous electrolytic solution, preparation of separator and preparation of battery with the exception for the preparation of positive electrode active materials.

### Examples 1-2 to 1-6

In the preparation of co-doped lithium manganese phosphate cores, the conditions for the preparation of lithium manganese phosphate cores in Examples 1-2 to 1-6 were the same as those in Example 1-1 with the exception that vanadium dichloride and cobalt sulfate were not used, and that 463.4 g of ferrous carbonate, 1.6 g of dilute sulfuric acid at a concentration of 60%, 1148.9 g of ammonium dihydrogen phosphate, and 369.0 g of lithium carbonate were used.

In addition, in the preparation of lithium iron pyrophosphate and lithium iron phosphate and in the process of applying the first cladding layer and the second cladding layer, other conditions were the same as those in Example 1-1 except that the raw materials used were adjusted according to ratios of their applied amounts as shown in Table 1 to the applied amount corresponding to Examples 1-1, so that the amounts of Li₂FeP₂O₇/LiFePO₄ in Examples 1-2 to 1-6 were respectively 12.6 g/37.7 g, 15.7 g /47.1 g, 18.8 g/56.5 g, 22.0/66.0 g, and 25.1 g/75.4 g, and the amount of sucrose in Examples 1-2 to 1-6 was 37.3 g.

### Examples 1-7 to 1-10

The conditions in Examples 1-7 to 1-10 were the same as those in Example 1-3 with the exception that the amount of sucrose was 74.6 g, 149.1 g, 186.4 g, and 223.7 g, respectively, so that the corresponding amounts of carbon layer as a second cladding layer were 31.4 g, 62.9 g, 78.6 g, and 94.3 g, respectively.

### Examples 1-11 to 1-14

The conditions in Examples 1-11 to 1-14 were the same as those in Example 1-7 with the exception that in the preparation of lithium iron pyrophosphate and lithium iron phosphate, the amounts of various raw materials were adjusted according to the applied amounts shown in Table 1 so that the amounts of Li₂FeP₂O₇/LiFePO₄ were 23.6g/39.3g, 31.4g/31.4g, 39.3g/23.6g, and 47.2g/15.7g, respectively.

### Example 1-15

The conditions in Example 1-15 was the same as those in Example 1-14 with the exception that in the preparation of co-doped lithium manganese phosphate core, 492.80 g of zinc carbonate was used instead of ferrous carbonate.

### Examples 1-16 to 1-18

The conditions in Examples 1-16 to 1-18 were the same as those in Example 1-7 with the exception that in the preparation of co-doped lithium manganese phosphate core of Example 1-16, 466.4 g of nickel carbonate, 5.0 g of zinc carbonate, and 7.2 g of titanium sulfate were used instead of ferrous carbonate; in the preparation of co-doped lithium manganese phosphate core of Example 1-17, 455.2 g of ferrous carbonate and 8.5 g of vanadium dichloride were used; and in the preparation of co-doped lithium manganese phosphate core of Example 1-18, 455.2 g of ferrous carbonate, 4.9 g of vanadium dichloride and 2.5 g of magnesium carbonate were used.

### Examples 1-19 to 1-20

The conditions in Examples 1-19 to 1-20 were the same as those in Example 1-18 with the exception that in the preparation of co-doped lithium manganese phosphate core of Example 1-19, 369.4 g of lithium carbonate was used, and 1.05 g of dilute nitric acid at a concentration of 60% was used instead of dilute sulfuric acid; and in the preparation of co-doped lithium manganese phosphate core of Example 1-20, 369.7 g of lithium carbonate was used, and 0.78 g of metasilicic acid was instead of dilute sulfuric acid.

### Examples 1-21 to 1-22

The conditions in Examples 1-21 to 1-22 were the same as those in Example 1-20 with the exception that in the preparation of co-doped lithium manganese phosphate core of Example 1-21, 632.0 g of manganese carbonate, 463.30 g of ferrous carbonate, 30.5 g of vanadium dichloride, 21.0 g of magnesium carbonate, and 0.78 g of metasilicic acid were used; and in the preparation of co-doped lithium manganese phosphate core of Example 1-22, 746.9 g of manganese carbonate, 289.6 g of ferrous carbonate, 60.9 g of vanadium dichloride, 42.1 g of magnesium carbonate, and 0.78 g of metasilicic acid were used.

### Examples 1-23 to 1-24

The conditions in Examples 1-23 to 1-24 were the same as those in Example 1-22 with the exception that in the preparation of the co-doped lithium manganese phosphate core of Example 1-23, 804.6 g of manganese carbonate, 231.7 g of ferrous carbonate, 1156.2 g of ammonium dihydrogen phosphate, 1.2 g of boric acid (in a mass fraction of 99.5%), and 370.8 g of lithium carbonate were used; and in the preparation of the co-doped lithium manganese phosphate core of Example 1-24, 862.1 g of manganese carbonate, 173.8 g of ferrous carbonate, 1155.1 g of ammonium dihydrogen phosphate, 1.86 g of boric acid (in a mass fraction of 99.5%), and 371.6 g of lithium carbonate were used.

### Examples 1-25

The conditions in Example 1-25 was the same as those in Example 1-20 with the exception that in the preparation of the co-doped lithium manganese phosphate core of Example 1-25, 370.1 g of lithium carbonate, 1.56 g of metasilicic acid and 1147.7 g of ammonium dihydrogen phosphate were used.

### Examples 1-26

The conditions in Example 1-26 was the same as those in Example 1-20 with the exception that in the preparation of the co-doped lithium manganese phosphate core of Example 1-26, 368.3 g of lithium carbonate, 4.9 g of dilute sulfuric acid at 60% by mass, 919.6 g of manganese carbonate, 224.8 g of ferrous carbonate, 3.7 g of vanadium dichloride, 2.5 g of magnesium carbonate and 1146.8 g of ammonium dihydrogen phosphate were used.

### Examples 1-27

The conditions in Example 1-27 was the same as those in Example 1-20 with the exception that in the preparation of the co-doped lithium manganese phosphate core of Example 1-27, 367.9 g of lithium carbonate, 6.5 g of dilute sulfuric acid at a concentration of 60% and 1145.4 g of ammonium dihydrogen phosphate were used.

### Examples 1-28 to 1-33

The conditions in Examples 1-28 to 1-33 were the same as those in Example 1-20 with the exception that in the preparation of the co-doped lithium manganese phosphate core of Example 1-28 to 1-33, 1034.5g of manganese carbonate, 108.9g of ferrous carbonate, 3.7g of vanadium dichloride and 2.5g of magnesium carbonate were used, lithium carbonate was used in an amount of 367.6g, 367.2g, 366.8g, 366.4g, 366.0g and 332.4g, respectively, ammonium dihydrogen phosphate was used in an amount of 1144.5g, 1143.4g, 1142.2g, 1141.1g, 1139.9g and 1138.8g, respectively, and dilute sulfuric acid with a concentration of 60% was used in an amount of8.2g, 9.8g, 11.4g, 13.1g, 14.7g and 16.3g, respectively.

Examples 2-1 to 2-3 were the same as Example 1-1 in terms of the preparation of positive electrode plate, preparation of negative electrode plate, preparation of non-aqueous electrolytic solution, preparation of separator and preparation of battery with the exception for the preparation of positive electrode active materials.

### Example 2-1

Example 2-1 was the same as Example 1-1 with the exception that in the preparation of lithium iron pyrophosphate (Li₂FeP₂O₇), the sintering temperature in the powder sintering step was 550°C and the sintering time was 1 hour to control the crystallinity of Li₂FeP₂O₇ to be 30%, and in the preparation of lithium iron phosphate (LiFePO₄) the sintering temperature in the cladding sintering step was 650°C and the sintering time was 2 hours to control the crystallinity of LiFeP04 to be 30%.

### Example 2-2

Example 2-2 was the same as Example 1-1 with the exception that in the preparation of lithium iron pyrophosphate (Li₂FeP₂O₇), the sintering temperature in the powder sintering step was 550°C and the sintering time was 2 hours to control the crystallinity of Li₂FeP₂O₇ to be 50%, and in the preparation of lithium iron phosphate (LiFePO₄) the sintering temperature in the cladding sintering step was 650°C and the sintering time was 3 hours to control the crystallinity of LiFePO₄ to be 50%.

### Example 2-3

Example 2-3 was the same as Example 1-1 with the exception that in the preparation of lithium iron pyrophosphate (Li₂FeP₂O₇), the sintering temperature in the powder sintering step was 600°C and the sintering time was 3 hours to control the crystallinity of Li₂FeP₂O₇ to be 70%, and in the preparation of lithium iron phosphate (LiFePO₄) the sintering temperature in the cladding sintering step was 650°C and the sintering time was 4 hours to control the crystallinity of LiFeP04 to be 70%.

Examples 3-1 to 3-26 were the same as Example 1-1 in terms of the preparation of positive electrode active material, preparation of positive electrode plate, preparation of negative electrode plate, preparation of non-aqueous electrolytic solution, preparation of separator and preparation of battery with the exception for the preparation of non-aqueous electrolytic solution. The preparation process of the non-aqueous electrolytic solution were listed in table 2 in detail.

Comparative Examples 1 to 8 were the same as Example 1-1 in terms of the preparation of positive electrode plate, preparation of negative electrode plate, preparation of separator and preparation of battery with the exception for the preparation of positive electrode active materials and the preparation of non-aqueous electrolytic solution. See Table 2 for the details of the process for preparing the non-aqueous electrolytic solution.

### Comparative Example 1

Preparation of manganese oxalate: 1149.3 g of manganese carbonate was added to a reaction kettle and 5 L of deionized water and 1260.6 g of oxalic acid dihydrate (as C₂H₂O₄•2H₂O, hereinafter the same) were added. The reaction kettle was heated to 80°C and stirred at 600 rpm for 6 h until the reaction ended (no bubbles were generated) and a suspension of manganese oxalate was obtained. Then the suspension was filtered and the resulting filter cake was dried at 120°C, after which it was ground to obtain particles of manganese oxalate with a median particle size Dvso of 100 nm.

Preparation of lithium manganese phosphate clad with carbon: 1789.6 g of the above particles of manganese oxalate dihydrate, 369.4 g of lithium carbonate (as Li₂CO₃, hereinafter the same), 1150.1 g of ammonium dihydrgen phosphate (as NH₄H₂PO₄, hereinafter the same) and 31 g of sucrose (as C₁₂H₂₂O₁₁, hereinafter the same) were added to 20 litres of deionized water. The mixture was stirred for 10 hours homogeneously to obtain a slurry. The slurry was transferred to a spray drying equipment for spray drying granulation, with a drying temperature of 250°C for 4 hours to obtain powders. The above powder was sintered at 700°C for 4 hours in a protective atmosphere of nitrogen (90 vol%) + hydrogen (10 vol%) to obtain lithium manganese phosphate clad with carbon.

Preparation of non-aqueous electrolytic solution: In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ was dissolved, and the resulting mixture was stirred homogeneously, to obtain a non-aqueous electrolytic solution.

### Comparative Example 2

The conditions in Comparative Example 2 was the same as those in Comparative Example 1 with the exception that 689.5 g of manganese carbonate was used and 463.3 g of ferrous carbonate was additionally added.

### Comparative Example 3

The conditions in Comparative Example 3 was the same as those in Comparative Example 1 with the exception that 1148.9 g of ammonium dihydrogen phosphate and 369.0 g of lithium carbonate were used, and 1.6 g of dilute sulfuric acid at a concentration of 60% was additionally added.

### Comparative Example 4

The conditions in Comparative Example 4 was the same as those in Comparative Example 1 with the exception that 689.5 g of manganese carbonate, 1148.9 g of ammonium dihydrogen phosphate and 369.0 g of lithium carbonate were used and 463.3 g of ferrous carbonate and 1.6 g of dilute sulfuric acid at a concentration of 60% were additionally added.

### Comparative Example 5

The conditions in Comparative Example 5 was the same as those in Comparative Example 4 with the exception that the following steps were additionally added. Preparation of lithium iron pyrophosphate powder: 9.52 g of lithium carbonate, 29.9 g of ferrous carbonate, 29.6 g of ammonium dihydrogen phosphate and 32.5 g of oxalic acid dihydrate were dissolved in 50 mL of deionized water. The mixture had a pH of 5. The reaction mixture was allowed to fully react with stirring for 2 hours. The reacted solution was then warmed to 80°C and maintained at that temperature for 4 hours to obtain a suspension comprising Li₂FeP₂O₇, which was filtered. The resulting filter cake was washed with deionized water and dried at 120°C for 4 hours to obtain powder. The powder was sintered at 500°C under a nitrogen atmosphere for 4 hours and naturally cooled it to room temperature and then ground so as to the crystallinity of Li₂FeP₂O₇ was controlled to be 5%, and in the preparation of carbon cladding materials, the amount of Li₂FeP₂O₇ was 62.8g.

### Comparative Example 6

The conditions in Comparative Example 6 was the same as those in Comparative Example 4 with the exception that the following steps were additionally added. Preparation of suspension of lithium iron phosphate: 14.7 g of lithium carbonate, 46.1 g of ferrous carbonate, 45.8 g of ammonium dihydrogen phosphate, and 50.2 g of oxalic acid dihydrate were dissolved in 500 mL of deionized water and then it was allowed to fully react with stirring for 6 hours. The reacted solution was then heated to 120°C and maintained at that temperature for 6 hours to obtain a suspension comprising LiFePO₄. In the preparation of lithium iron phosphate (LiFePO₄), the sintering temperature in the cladding sintering step was 600°C and the sintering time in the cladding sintering step was 4 hours to control the crystallinity of LiFePO₄ to 8%, and in the preparation of carbon cladding materials, the amount of LiFePO₄ was 62.8g.

### Comparative Example 7

Preparation of lithium iron pyrophosphate powder: 2.38 g of lithium carbonate, 7.5 g of ferrous carbonate, 7.4 g of ammonium dihydrogen phosphate and 8.1 g of oxalic acid dihydrate were dissolved in 50 mL of deionized water. The mixture has a pH of 5. The reaction mixture was allowed to fully react with stirring for 2 hours. The reacted solution was then warmed to 80°C and maintained at that temperature for 4 hours to obtain a suspension comprising Li₂FeP₂O₇, which was filtered. The resulting filter cake was washed with deionized water and dried at 120°C for 4 hours to obtain a powder. The powder was sintered at 500°C under nitrogen atmosphere for 4 hours and ground after it was naturally cooled to room temperature, so as to control the crystallinity of Li₂FeP₂O₇ to be 5%.

Preparation of lithium iron phosphate suspension: 11.1 g of lithium carbonate, 34.7 g of ferrous carbonate, 34.4 g of ammonium dihydrogen phosphate, 37.7 g of oxalic acid dihydrate, and 37.3 g of sucrose (as C₁₂H₂₂O₁₁, hereinafter the same) were dissolved in 1,500 mL of deionized water, and then the mixture was allowed to fully react with stirring for 6 hours. The reacted solution was then warmed to 120°C and maintained at that temperature for 6 hours to obtain a suspension containing LiFePO₄.

Other conditions of Comparative Example 7 was the same as those of Comparative Example 4 with the exception that 15.7 g of the obtained lithium iron pyrophosphate powder was added to the suspension of lithium iron phosphate (LiFePO₄) and sucrose described above, and the sintering temperature in the cladding and sintering step of the preparation process was 600°C, and the sintering time was 4 hours to control the crystallinity of LiFePO₄ to be 8%, thereby obtaining positive electrode active materials of amorphous lithium iron pyrophosphate, amorphous lithium iron phosphate, with carbon cladding.

### Comparative Example 8

Comparative Example 8 was the same as Example 1-3 with the exception that no compound H38 was added in the preparation of a non-aqueous electrolytic solution.

### Test methods for related performance parameters

### 1. Determination of the chemical formula of core and the compositions of different cladding layers

The internal microstructure and surface structure of the positive electrode active material were characterized with high spatial resolution by a spherical Aberration Corrected Scanning Transmission Electron Microscope (ACSTEM). By combining with a three-dimensional reconstruction technology, the chemical formula of the core and the compositions of the first cladding layer and the second cladding layer of the positive electrode active material were obtained.

### 2. Determination of initial specific capacity of button battery

The above prepared button battery was charged to 4.3V at 0.1C, then charged at a constant voltage of 4.3V until the current was less than or equal to 0.05 mA. It was allowed to stand for 5 minutes. Then the button battery was discharged at 0.1C to 2.0V. The discharge capacity measured at this moment was initial specific capacity, denoted as D0.

### 3. Determination of average discharge voltage (V) of button battery

Under a constant temperature environment of 25°C, the above prepared button battery was allowed to stand for 5 minutes, then was discharged to 2.5V at 0.1C, then was allowed to stand for 5 minutes, then charged to 4.3 V at 0.1C, then was charged at a constant voltage of 4.3V until the current was less than or equal to 0.05mA, then was allowed to stand for 5 minutes; and then was discharged to 2.5V at 0.1C. The discharge capacity measured at this moment was initial specific capacity, denoted as D0, and the discharge energy at this moment was initial energy, denoted as E0. The average discharge voltage (V) of button battery was E0/D0.

### 4. Test of gas expansion at 60°C of full battery

The above prepared full battery was stored at 100% state of charge (SOC) at 60°C. Before, during, and after the storage, open circuit voltage (OCV) and AC internal impedance (IMP) of the battery were tested to monitor SOC and volume of the battery was measured. After every 48 hours of storage, the full battery was taken out and allowed to stand for 1 hour, and then open circuit voltage (OCV) and internal impedance (IMP) were tested. After it was cooled to room temperature, the volume of the battery was measured using a drainage method. The drainage method included measuring gravity F₁ of the battery alone with a balance that can automatically perform unit conversion with a dial data, and then placing the battery completely in deionized water (with a density of 1g/cm³), measuring gravity F₂ of the battery at this moment wherein a buoyant force F_{b} of the battery was F₁-F₂, and then according to the Archimedes principle F_{b} = ρ× g × V_{Drainage}, the volume of the battery was calculated: V=( F₁-F₂)/(ρ×g).

From the OCV and IMP test results, it can be seen that the batteries of the examples maintain a SOC of 99% or higher throughout the testing process until the end of storage.

After 30 days of storage, the volume of battery was measured, and the increased percentage in battery volume after storage compared to the previous battery volume was calculated.

### 5. Test of cycling performance at 45 °C of full battery

Under a constant temperature environment of 45°C, the above prepared full battery was charged at 1C to 4.3V, and then charged at a constant voltage at 4.3V until the current was less than or equal to 0.05 mA. The full battery was allowed to stand for 5 minutes, then discharged at 1C to 2.5V. The discharge capacity at this moment was reported as D0. The above charge-discharge cycle was repeated until the discharge capacity was reduced to 80% of D0. The number of cycles that the battery had undergone at this moment was reported.

### 6. Determination of lattice change rate

Under a constant temperature environment of 25°C, the above prepared positive electrode active material sample was placed in XRD (Bruker D8 Discover model) and tested at 1°/minute. The test data was organized and analyzed. Referring to the standard PDF card, the lattice constants a0, b0, c0, and v0 (a0, b0, and c0 represent the length size in different directions of lattice cell, respectively, v0 represents the volume of lattice cell, which can be directly obtained through XRD refinement results) were calculated.

Using the preparation method of button battery, the positive electrode active material sample was prepared into a button battery. The button battery was charged at a small rate of 0.05C until the current was decreased to 0.01C. Then the positive electrode plate was taken out of the button battery and soaked in dimethyl carbonate (DMC) for 8 hours. After drying and scraping the powder, the particles with a particle size less than 500 nm were obtained by sieving. A sample was taken and its lattice volume v1 was calculated in the same way as the fresh sample was tested above. (v0-v1)/v0 x100% representing the lattice change rate (lattice volume change rate) of before and after complete de-intercalation and intercalation of lithium was shown in the table.

### 7. Determination of Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 8. Determination of leaching out of transition metal ions

At 45°C, a full battery with capacity reduced to 80% was discharged to 2.0 V of cutoff voltage at a rate of 0.1 C. Then the battery was disassembled, the negative electrode plate was taken out. 30 discs having a unit area (1540.25mm²) were randomly taken on the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycling was calculated. The testing standard was based on EPA-6010D-2014.

### 9. Determination of surface oxygen valence

5g of the above prepared positive electrode active material sample was taken and prepared into a button battery according to the preparation method of button battery. The button battery was charged at a low rate of 0.05C until the current decreased to 0.01C. Then the positive electrode plate was taken out of the button battery and soaked in dimethyl carbonate (DMC) for 8 hours. After drying and scraping the powder, the particles with a particle size less than 500 nm were obtained by sieving. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating data on the density of states in valence band, thereby calculating the surface oxygen valence after charging.

### 10. Determination of compaction density

5g of the above prepared positive electrode active material powders were taken and placed in a special mold for compaction (CARVER mold in the United States, model 13mm), and then the mold was placed on a compaction density instrument. 3T (tonnes) of pressure was applied and thickness of powders under the pressure was read on the equipment (i.e. the thickness after the pressure is removed, the area of the container used for testing being 1540.25mm²). The compaction density was calculated via ρ= m/v.

### 11. X-ray diffraction method for testing the crystallinity of pyrophosphates and phosphates:

5g of the above prepared positive active material powder was taken, and the total scattering intensity was measured by X-ray, which was the sum of the scattering intensity of the whole space material, and is only related to the intensity of the primary rays, the chemical structure, and the total number of electrons participating in diffraction (i.e., the mass), and has nothing to do with the ordinal state of the samples; and then the crystalline scattering and the amorphous scattering were separated from the diffraction pattern, and the crystallinity was the ratio of the scattering of the crystallized fraction to the total scattering intensity.

### 12. Interplanar plane spacing and crystal orientation angle:

1g of the above prepared positive electrode active material powder each was placed in a 50mL test tube, to which lOmL of alcohol with 75% by mass was injected, and then it was subjected to sufficient stirring and dispersion for 30 minutes. And then an appropriate amount of the above solution was dropped on ta 300-mesh copper mesh with a clean disposable plastic pipette. At this time, some of the powder would be left on the copper mesh, and then the copper mesh with samples would be transferred to a TEM (Talo F200s G2) sample chamber for testing, thereby obtaining original images of TEM testing.

The above TEM images were opened in DigitalMicrograph software and subjected to Fourier transform (automatically done by the software after clicking the operation) to get a diffraction pattern, the distance from the diffracted spot to the center of diffraction pattern was measured to get an interplanar spacing, and the crystal orientation angle was calculated according to the Bragg's equation.

Table 1 shows the composition of the positive electrode active material in Examples 1-1 to 1-33 and Comparative Examples 1-8.

**Table 1**

| No. | Core | First cladding layer | Second cladding layer |
|---|---|---|---|
| Example 1-1 | Li_{0.999}Mn_{0.60}Fe_{0.393}V_{0.004}Co_{0.003}P_{0.999}S_{0.001}O₄ | 1% Li₂FeP₂O₇/3% LiFePO₄ | 2% carbon |
| Example 1-2 | Li_{0.999}Mn_{0.60}Fe_{0.40}P_{0.999}S_{0.001}O₄ | 0.8% Li₂FeP₂O₇/2.4% LiFePO₄ | 1% carbon |
| Example 1-3 | Li_{0.999}Mn_{0.60}Fe_{0.40}P_{0.999} S_{0.001}O₄ | 1% Li₂FeP₂O₇/3% LiFePO₄ | 1% carbon |
| Example 1-4 | Li_{0.999}Mn_{0.60}Fe_{0.40}P_{0.999} S_{0.001}O₄ | 1.2% Li₂FeP₂O₇/3.6% LiFePO₄ | 1% carbon |
| Example 1-5 | Li_{0.999}Mn_{0.60}Fe_{0.40}P_{0.999} S_{0.001}O₄ | 1.4% Li₂FeP₂O₇/4.2% LiFePO₄ | 1% carbon |
| Example 1-6 | Li_{0.999}Mn_{0.60}Fe_{0.40}P_{0.999} S_{0.001}O₄ | 1.6% Li₂FeP₂O₇/4.8% LiFePO₄ | 1% carbon |
| Example 1-7 | Li_{0.999}Mn_{0.60}Fe_{0.40}P_{0.999} S_{0.001}O₄ | 1% Li₂FeP₂O₇/3% LiFePO₄ | 2% carbon |
| Example 1-8 | Li_{0.999}Mn_{0.60}Fe_{0.40}P_{0.999} S_{0.001}O₄ | 1% Li₂FeP₂O₇/3% LiFePO₄ | 4% carbon |
| Example 1-9 | Li_{0.999}Mn_{0.60}Fe_{0.40}P_{0.999} S_{0.001}O₄ | 1% Li₂FeP₂O₇/3% LiFePO₄ | 5% carbon |
| Example 1-10 | Li_{0.999}Mn_{0.60}Fe_{0.40}P_{0.999} S_{0.001}O₄ | 1% Li₂FeP₂O₇/3% LiFePO₄ | 6% carbon |
| Example 1-11 | Li_{0.999}Mn_{0.60}Fe_{0.40}P_{0.999} S_{0.001}O₄ | 1.5% Li₂FeP₂O₇/2.5% LiFePO₄ | 2% carbon |
| Example 1-12 | Li_{0.999}Mn_{0.60}Fe_{0.40}P_{0.999}S_{0.001}O₄ | 2% Li₂FeP₂O₇/2% LiFePO₄ | 2% carbon |
| Example 1-13 | Li_{0.999}Mn_{0.60}Fe_{0.40}P_{0.999}S_{0.001}O₄ | 2.5% Li₂FeP₂O₇/1.5% LiFePO₄ | 2% carbon |
| Example 1-14 | Li_{0.999}Mn_{0.60}Fe_{0.40}P_{0.999}S_{0.001}O₄ | 3% Li₂FeP₂O₇/1% LiFePO₄ | 2% carbon |
| Example 1-15 | Li_{0.999}Mn_{0.60}Zn_{0.40}P_{0.999}S_{0.001}O₄ | 3% Li₂FeP₂O₇/1% LiFePO₄ | 2% carbon |
| Example 1-16 | Li_{0.993}Mn_{0.6}Ni_{0.393}Zn_{0.004}Ti_{0.003}P_{0.999}S_{0.001}O₄ | 1% Li₂FeP₂O₇/3% LiFePO₄ | 2% carbon |
| Example 1-17 | Li_{0.999}Mn_{0.60}Fe_{0.393}V_{0.007}P_{0.999}S_{0.001}O₄ | 1% Li₂FeP₂O₇/3% LiFePO₄ | 2% carbon |
| Example 1-18 | Li_{0.999}Mn_{0.60}Fe_{0.393}V_{0.004}Mg_{0.003}P_{0.999}S_{0.001}O₄ | 1% Li₂FeP₂O₇/3% LiFePO₄ | 2% carbon |
| Example 1-19 | LiMn_{0.60}Fe_{0.393}V_{0.004}Mg_{0.003}P_{0.999}N_{0.001}O₄ | 1% Li₂FeP₂O₇/3% LiFePO₄ | 2% carbon |
| Example 1-20 | Li_{1.001}Mn_{0.60}Fe_{0.393}V_{0.004}Mg_{0.003}P_{0.999}Si_{0.001}O₄ | 1% Li₂FeP₂O₇/3% LiFePO₄ | 2% carbon |
| Example 1-21 | Li_{1.001}Mn_{0.55}Fe_{0.40}V_{0.025}Mg_{0.025}P_{0.999}Si_{0.001}O₄ | 1% Li₂FeP₂O₇/3% LiFePO₄ | 2% carbon |
| Example 1-22 | Li_{1.001}Mn_{0.65}Fe_{0.25}V_{0.05}Mg_{0.05}P_{0.999}Si_{0.001}O₄ | 1% Li₂FeP₂O₇/3% LiFePO₄ | 2% carbon |
| Example 1-23 | Li_{1.004}Mn_{0.7}Fe_{0.2}V_{0.05}Mg_{0.05}P_{0.998}B_{0.002}O₄ | 1% Li₂FeP₂O₇/3% LiFePO₄ | 2% carbon |
| Example 1-24 | Li_{1.006}Mn_{0.75}Fe_{0.15}V_{0.05}Mg_{0.05}P_{0.997}B_{0.003}O₄ | 1% Li₂FeP₂O₇/3% LiFePO₄ | 2% carbon |
| Example 1-25 | Li_{1.002}Mn_{0.60}Fe_{0.393}V_{0.004}Mg_{0.003}P_{0.998}Si_{0.002}O₄ | 1% Li₂FeP₂O₇/3% LiFePO₄ | 2% carbon |
| Example 1-26 | Li_{0.997}Mn_{0.80}Fe_{0.194}V_{0.003}Mg_{0.003}P_{0.997}S_{0.003}O₄ | 1% Li₂FeP₂O₇/3% LiFePO₄ | 2% carbon |
| Example 1-27 | Li_{0.996}Mn_{0.60}Fe_{0.393}V_{0.004}Mg_{0.003}P_{0.996}S_{0.004}O₄ | 1% Li₂FeP₂O₇/3% LiFePO₄ | 2% carbon |
| Example 1-28 | Li_{0.995}Mn_{0.9}Fe_{0.094}V_{0.003}Mg_{0.003}P_{0.995}S_{0.005}O₄ | 1% Li₂FeP₂O₇/3% LiFePO₄ | 2% carbon |
| Example 1-29 | Li_{0.994}Mn_{0.90}Fe_{0.094}V_{0.003}Mg_{0.003}P_{0.994}S_{0.006}O₄ | 1% Li₂FeP₂O₇/3% LiFePO₄ | 2% carbon |
| Example 1-30 | Li_{0.993}Mn_{0.90}Fe_{0.094}V_{0.003}Mg_{0.003}P_{0.993}S_{0.007}O₄ | 1% Li₂FeP₂O₇/3% LiFePO₄ | 2% carbon |
| Example 1-31 | Li_{0.992}Mn_{0.90}Fe_{0.094}V_{0.003}Mg_{0.003}P_{0.992}S_{0.008}O₄ | 1% Li₂FeP₂O₇/3% LiFePO₄ | 2% carbon |
| Example 1-32 | Li_{0.991}Mn_{0.90}Fe_{0.094}V_{0.003}Mg_{0.003}P_{0.991}S_{0.009}O₄ | 1% Li₂FeP₂O₇/3% LiFePO₄ | 2% carbon |
| Example 1-33 | Li_{0.9}Mn_{0.90}Fe_{0.094}V_{0.003}Mg_{0.003}P_{0.9}S_{0.1}O₄ | 1% Li₂FeP₂O₇/3% LiFePO₄ | 2% carbon |
| Comparative Example 1 | LiMnPO₄ | - | 1% carbon |
| Comparative Example 2 | LiMn_{0.60}Fe_{0.40}PO₄ | - | 1% carbon |
| Comparative Example 3 | Li_{0.999}MnP_{0.999}S_{0.001}O₄ | - | 1% carbon |
| Comparative Example 4 | Li_{0.999}Mn_{0.60}Fe_{0.40}P_{0.999} S_{0.001}O₄ | - | 1% carbon |
| Comparative Example 5 | Li_{0.999}Mn_{0.60}Fe_{0.40}P_{0.999} S_{0.001}O₄ | 4% amphorous Li₂FeP₂O₇ | 1% carbon |
| Comparative Example 6 | Li_{0.999}Mn_{0.60}Fe_{0.40}P_{0.999} S_{0.001}O₄ | 4% amphorous LiFePO₄ | 1% carbon |
| Comparative Example 7 | Li_{0.999}Mn_{0.60}Fe_{0.40}P_{0.999} S_{0.001}O₄ | 1% amphorous Li₂FeP₂O₇+3% amphorous LiFePO₄ | 1% carbon |
| Comparative Example 8 | Li_{0.999}Mn_{0.60}Fe_{0.40}P_{0.999} S_{0.001}O₄ | 1% Li₂FeP₂O₇/3% LiFePO₄ | 1% carbon |
| Note: 1) In Examples 1-1 to 1-33 and Comparative Example 8, Li₂FeP₂O₇ and LiFePO₄ both have a crystalline of 100%; 2) | | | |
| In Comparative Examples 5-7, Li₂FeP₂O₇ has a crystalline of 5% and LiFePO₄ has a crystalline of 8%_{∘} | | | |

Table 2 shows preparation of non-aqueous electrolytic solutions of Examples 1-1 to 1-33, Examples 2-1 to 2-3, Examples 3-1 to 3-26 and Comparative Examples 1 to 8.

Table 3 shows the performance results measured by the above performance testing methods for the positive electrode active materials, positive electrode plates, button batteries or full batteries of Examples 1-1 to 1-33 and Comparative Examples 1 to 8.

Table 4 shows the performance results measured by the above performance testing methods for the positive electrode active materials, positive electrode plates, button batteries or full batteries of Examples 2-1 to 2-3.

**Table 2**

| No. | Preparation of non-aqueous electrolytic solution |
|---|---|
| Comparative Examples 1 to 8 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ was dissolved, and the resulting mixture was stirred homogeneously, to obtain a non-aqueous electrolytic solution. |
| Examples 1-1 to 1-33 and Examples 2-1 to 2-3 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H38 were dissolved, and the resulting mixture was stirred homogeneously, to obtain a non-aqueous electrolytic solution. |
| Example 3-1 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H2 were dissolved, and the resulting mixture was stirred homogeneously, to obtain a non-aqueous electrolytic solution. |
| Example 3-2 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H3 were dissolved, and the resulting mixture was stirred homogeneously, to obtain a non-aqueous electrolytic solution. |
| Example 3-3 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H12 were dissolved, and the resulting mixture was stirred homogeneously, to obtain a non-aqueous electrolytic solution. |
| Example 3-4 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H19 were dissolved, and the resulting mixture was stirred homogeneously, to obtain a non-aqueous electrolytic solution. |
| Example 3-5 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1: 1: 1, in which 12.5 wt% (based on the total weight of the non-aqueous electrolytic solution) of LiPF₆ and 1 wt% (based on the total weight of the non-aqueous electrolytic solution) of compound H20 were dissolved, and the resulting mixture was stirred homogeneously, to obtain a non-aqueous electrolytic solution. |
| Example 3-6 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H24 were dissolved, and the resulting mixture was stirred homogeneously, to obtain a non-aqueous electrolytic solution. |
| Example 3-7 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1: 1: 1, in which 12.5 wt% (based on the total weight of the non-aqueous electrolytic solution) of LiPF₆ and 1 wt% (based on the total weight of the non-aqueous electrolytic solution) of compound H28 were dissolved, and the resulting mixture was stirred homogeneously, to obtain a non-aqueous electrolytic solution. |
| Example 3-8 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H35 were dissolved, and the resulting mixture was stirred homogeneously, to obtain a non-aqueous electrolytic solution. |
| Example 3-9 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H36 were dissolved, and the resulting mixture was stirred homogeneously, to obtain a non-aqueous electrolytic solution. |
| Example 3-10 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H37 were dissolved, and the resulting mixture was stirred homogeneously, to obtain a non-aqueous electrolytic solution. |
| Example 3-11 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of DTD were dissolved, and the resulting mixture was stirred homogeneously, to obtain a non-aqueous electrolytic solution. |
| Example 3-12 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium difluorophosphate were dissolved, and the resulting mixture was stirred homogeneously, to obtain a non-aqueous electrolytic solution. |
| Example 3-13 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆,1 wt% (based on the total weight of the non-aqueous electrolytic solution) of compound H38 and 1 wt% (based on the total weight of the non-aqueous electrolytic solution) of lithium difluorodioxalate phosphate were dissolved, and the resulting mixture was stirred homogeneously, to obtain a non-aqueous electrolytic solution. |
| Example 3-14 | In an argon atmosphere glove box (H₂O<0.1 ppm, Oz<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ , 1 wt% (based on the total weight of the non-aqueous electrolytic solution) of compound H38 and 1 wt% (based on the total weight of the non-aqueous electrolytic solution) of lithium fluorosulfonate were dissolved, and the resulting mixture was stirred homogeneously, to obtain a non-aqueous electrolytic solution. |
| Example 3-15 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium trifluoromethanesulfonate were dissolved, and the resulting mixture was stirred homogeneously, to obtain a non-aqueous electrolytic solution. |
| Example 3-16 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 1 wt% (based on the total weight of the non-aqueous electrolytic solution) of DTD and 1 wt% (based on the total weight of the non-aqueous electrolytic solution) of VC were dissolved, and the resulting mixture was stirred homogeneously, to obtain a non-aqueous electrolytic solution. |
| Example 3-17 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38, 1 wt% (based on the total weight of the non-aqueous electrolytic solution) of DTD and 1 wt% (based on the total weight of the non-aqueous electrolytic solution) of VEC were dissolved, and the resulting mixture was stirred homogeneously, to obtain a non-aqueous electrolytic solution. |
| Example 3-18 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38, 1 wt% (based on the total weight of the non-aqueous electrolytic solution) of DTD and 1 wt% (based on the total weight of the non-aqueous electrolytic solution) of FEC were dissolved, and the resulting mixture was stirred homogeneously, to obtain a non-aqueous electrolytic solution. |
| Example 3-19 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.01 wt% (based on the total weight of the non-aqueous electrolytic solution) of compound H38 were dissolved, and the resulting mixture was stirred homogeneously, to obtain a non-aqueous electrolytic solution. |
| Example 3-20 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.1 wt% (based on the total weight of the non-aqueous electrolytic solution) of compound H38 were dissolved, and the resulting mixture was stirred homogeneously, to obtain a non-aqueous electrolytic solution. |
| Example 3-21 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, and 0.3 wt% (based on the total weight of the non-aqueous electrolytic solution) of compound H38 were dissolved, and the resulting mixture was stirred homogeneously, to obtain a non-aqueous electrolytic solution. |
| Example 3-22 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 5 wt% (based on the total weight of the non-aqueous electrolytic solution) of compound H38 were dissolved, and the resulting mixture was stirred homogeneously, to obtain a non-aqueous electrolytic solution. |
| Example 3-23 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 8 wt% (based on the total weight of the non-aqueous electrolytic solution) of compound H38 were dissolved, and the resulting mixture was stirred homogeneously, to obtain a non-aqueous electrolytic solution. |
| Example 3-24 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 10 wt% (based on the total weight of the non-aqueous electrolytic solution) of compound H38 were dissolved, and the resulting mixture was stirred homogeneously, to obtain a non-aqueous electrolytic solution. |
| Example 3-25 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 12 wt% (based on the total weight of the non-aqueous electrolytic solution) of compound H38 were dissolved, and the resulting mixture was stirred homogeneously, to obtain a non-aqueous electrolytic solution. |
| Example 3-26 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 20 wt% (based on the total weight of the non-aqueous electrolytic solution) of compound H38 were dissolved, and the resulting mixture was stirred homogeneously, to obtain a non-aqueous electrolytic solution. |

**Table 3**

| No. | Lattice change rate (%) | Li/Mn anti-site defect concentration (%) | Compaction density (g/cm³) | surface oxygen valence | leaching out of Fe and Mn (ppm) after cycling | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|---|---|
| Example 1-1 | 2.4 | 0.4 | 2.41 | -1.98 | 6 | 159.8 | 3.82 | 1.0 | 1594 |
| Example 1-2 | 6.6 | 1.2 | 2.43 | -1.97 | 53 | 150.4 | 3.79 | 3.2 | 965 |
| Example 1-3 | 6.5 | 1.1 | 2.45 | -1.97 | 40 | 150.0 | 3.78 | 2.7 | 1102 |
| Example 1-4 | 6.5 | 0.8 | 2.44 | -1.97 | 29 | 148.8 | 3.77 | 2.4 | 1162 |
| Example 1-5 | 6.5 | 0.7 | 2.45 | -1.98 | 18 | 148.3 | 3.77 | 1.8 | 1277 |
| Example 1-6 | 6.6 | 0.6 | 2.45 | -1.98 | 14 | 147.4 | 3.76 | 1.4 | 1427 |
| Example 1-7 | 6.5 | 1.0 | 2.46 | -1.97 | 35 | 149.0 | 3.77 | 2.4 | 1162 |
| Example 1-8 | 6.5 | 1.0 | 2.47 | -1.97 | 32 | 147.9 | 3.77 | 2.2 | 1214 |
| Example 1-9 | 6.4 | 1.1 | 2.44 | -1.98 | 26 | 145.7 | 3.77 | 1.9 | 1330 |
| Example 1-10 | 6.4 | 1.1 | 2.41 | -1.98 | 16 | 143.5 | 3.77 | 1.4 | 1463 |
| Example 1-11 | 6.5 | 1.1 | 2.44 | -1.97 | 29 | 149.3 | 3.78 | 2.6 | 1112 |
| Example 1-12 | 6.6 | 1.0 | 2.47 | -1.96 | 20 | 149.1 | 3.78 | 3.1 | 1076 |
| Example 1-13 | 6.7 | 1.2 | 2.46 | -1.96 | 16 | 148.7 | 3.78 | 3.5 | 979 |
| Example 1-14 | 6.7 | 1.1 | 2.45 | -1.97 | 8 | 148.5 | 3.79 | 3.8 | 917 |
| Example 1-15 | 7.5 | 2.5 | 2.45 | -1.97 | 14 | 140.1 | 3.89 | 4.2 | 1028 |
| Example 1-16 | 5.4 | 0.8 | 2.44 | -1.97 | 13 | 140.8 | 3.89 | 2.3 | 1169 |
| Example 1-17 | 4.2 | 0.6 | 2.45 | -1.97 | 12 | 154.7 | 3.82 | 1.6 | 1489 |
| Example 1-18 | 2.6 | 0.5 | 2.45 | -1.97 | 9 | 157.2 | 3.84 | 1.4 | 1494 |
| Example 1-19 | 2.3 | 0.5 | 2.45 | -1.98 | 8 | 159.2 | 3.84 | 1.1 | 1619 |
| Example 1-20 | 2.4 | 0.7 | 2.44 | -1.98 | 9 | 159.0 | 3.84 | 1.2 | 1642 |
| Example 1-21 | 2.2 | 0.5 | 2.43 | -1.98 | 7 | 160.0 | 3.76 | 1.0 | 1751 |
| Example 1-22 | 2.5 | 0.8 | 2.42 | -1.98 | 9 | 158.5 | 3.87 | 1.4 | 1540 |
| Example 1-23 | 2.6 | 0.8 | 2.43 | -1.98 | 10 | 158.7 | 3.87 | 1.3 | 1522 |
| Example 1-24 | 2.6 | 0.8 | 2.44 | -1.98 | 8 | 159.0 | 3.87 | 1.3 | 1595 |
| Example 1-25 | 2.3 | 0.7 | 2.45 | -1.98 | 9 | 158.9 | 3.82 | 1.2 | 1643 |
| Example 1-26 | 2.8 | 0.9 | 2.45 | -1.98 | 11 | 157.7 | 3.88 | 1.5 | 1354 |
| Example 1-27 | 2.2 | 0.6 | 2.46 | -1.98 | 10 | 159.1 | 3.82 | 1.2 | 1673 |
| Example 1-28 | 3.2 | 1.1 | 2.45 | -1.96 | 11 | 158.4 | 3.90 | 1.6 | 1307 |
| Example 1-29 | 3.0 | 1.2 | 2.44 | -1.95 | 13 | 157.7 | 3.90 | 1.6 | 1246 |
| Example 1-30 | 2.8 | 1.4 | 2.45 | -1.95 | 13 | 157.4 | 3.90 | 1.6 | 1138 |
| Example 1-31 | 2.6 | 1.4 | 2.44 | -1.94 | 14 | 157.0 | 3.90 | 1.5 | 1100 |
| Example 1-32 | 2.4 | 1.2 | 2.45 | -1.94 | 16 | 156.3 | 3.90 | 1.4 | 1076 |
| Example 1-33 | 2.1 | 0.9 | 2.44 | -1.94 | 17 | 156.0 | 3.90 | 1.4 | 1055 |
| Comparative Example 1 | 11.4 | 3.2 | 1.81 | -1.55 | 2060 | 125.6 | 4.02 | 48.6 | 185 |
| Comparative Example 2 | 8.7 | 2.8 | 1.92 | -1.76 | 1597 | 134.8 | 3.76 | 42.5 | 358 |
| Comparative Example 3 | 9.8 | 2.5 | 1.88 | -1.66 | 1895 | 128.6 | 4.05 | 45.5 | 267 |
| Comparative Example 4 | 6.7 | 1.8 | 1.82 | -1.83 | 1279 | 140.5 | 3.78 | 38.5 | 417 |
| Comparative Example 5 | 6.5 | 1.8 | 1.79 | -1.90 | 208 | 140.3 | 3.73 | 12.5 | 519 |
| Comparative Example 6 | 6.6 | 1.8 | 1.83 | -1.91 | 318 | 140.2 | 3.74 | 11.5 | 528 |
| Comparative Example 7 | 6.6 | 1.8 | 1.84 | -1.90 | 174 | 140.1 | 3.75 | 8.6 | 682 |
| Comparative Example 8 | 6.5 | 1.1 | 2.45 | -1.97 | 48 | 148.5 | 3.74 | 5.3 | 918 |

**Table 4**

| No. | Crystallinity of pyrophosphate and phosphate | Lattice change rate (%) | Li/Mn anti-site defect concentration (%) | Compaction density (g/cm³) | surface oxygen valence | leaching out of Fe and Mn (ppm) after cycling | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|---|---|---|
| Example 2-1 | 30% | 6.3 | 1.9 | 2.1 | -1.88 | 110 | 146.7 | 3.76 | 2.8 | 838 |
| Example 2-2 | 50% | 4.7 | 1.2 | 2.25 | -1.89 | 73 | 150.7 | 3.78 | 2.4 | 1043 |
| Example 2-3 | 70% | 3.5 | 0.8 | 2.33 | -1.91 | 21 | 152.8 | 3.79 | 1.9 | 1232 |
| Example 1-1 | 100% | 2.4 | 0.4 | 2.41 | -1.98 | 6 | 159.8 | 3.83 | 1.0 | 1594 |

As can be seen from the combination of Examples 1-1 to 1-33 and Comparative Examples 1 to 8, the presence of the first cladding layer is favorable to reducing the Li/Mn anti-site defect concentration and the leaching out of Fe and Mn after cycling of the resulting material, increasing the specific capacity of batteries, and improving the cycling performance and the storage performance of batteries. When other elements are doped at the Mn site and the phosphorus site, respectively, the lattice change rate, the anti-site defect concentration, and the leaching out of Fe and Mn in the resulting material can be significantly reduced, the specific capacity of batteries can be increased, and the cycling performance and storage performance of batteries can be improved. The presence of the first additive in the non-aqueous electrolytic solution is conducive to reducing the generation of HF, lowering the acidity of the non-aqueous electrolytic solution, and thereby reducing the leaching out of manganese ions and the generation of gases; at the same time, the first additive is also capable of generating a homogeneous and dense interfacial film on the surface of the negative electrode active material, reducing the reduction reaction of the leached-out manganese ions at the negative electrode. As a result, when the non-aqueous electrolytic solution comprises the first additive, the cycling performance and storage performance of the battery can be further improved.

As can be seen from the combination of Examples 1-2 to 1-6, as the amount of the first cladding layer is increased from 3.2% to 6.4%, the Li/Mn anti-site defect concentration of the resulting material can be gradually decreased, and the leaching out of Fe and Mn after cycling can be gradually decreased, corresponding to the improvement of the safety performance and the cycling performance of batteries at 45°C, with a slight decrease in the specific capacity. Optionally, when the total amount of the first cladding layer is from 4 wt% to 5.6 wt%, the comprehensive performance of the corresponding battery is optimal.

As can be seen from the combination of Examples 1-3 and Examples 1-7 to 1-10, as the amount of the second cladding layer is increased from 1% to 6%, the leaching out of Fe and Mn in the resulting material after cycling is gradually decreased, corresponding to the improvement of the safety performance and the cycling performance of batteries at 45°C, with a slight decrease in the specific capacity. Optionally, when the total amount of the second cladding layer is from 3 wt% to 5 wt%, the comprehensive performance of the corresponding battery is optimal.

As can be seen from the combination of Examples 1-11 to 1-15 and the Comparative Examples 5 to 6, the improvement of battery performances is more pronounced when both Li₂FeP₂O₇ and LiFePO₄ are present in the first cladding layer, and in particular when a weight ratio of Li₂FeP₂O₇ and LiFePO₄ is from 1:3 to 3:1 and especially when a weight ratio of Li₂FeP₂O₇ and LiFePO₄ is from 1:3 to 1:1.

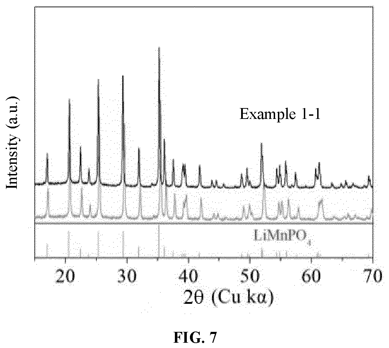

FIG. 7 is a comparison of an XRD spectrum of the core of the positive electrode active materials prepared in Example 1-1 with the XRD standard spectrum (00-033-0804) of lithium manganese phosphate. As shown in FIG. 7, the core of the positive electrode active material of the present application has basically same primary characteristic peaks at position to undoped LiMnPO₄, indicating that the core of the positive electrode active material of the present application has no impurity phase and the improvement of battery performances is mainly caused by doping of elements rather than by an impurity phase.

As can be seen from Table 3, with the gradual increase in crystallinity of pyrophosphate salts and phosphate salts in the first cladding layer, the lattice change rate, Li/Mn anti-site defect concentration, and leaching out of Fe and Mn of the corresponding materials are gradually decreased, and the specific capacity of batteries is gradually increased, and the safety performance and cycling performance are also gradually improved.

Examples 3-1 to 3-26 were the same as Example 1-1 with the exception for the preparation of non-aqueous electrolytic solution.

Table 5 shows the performance results measured by the above performance testing methods for the button battery or full battery of Examples 3-1 to 3-18.

Table 6 shows the performance results measured by the above performance testing methods for the button battery or full battery of Examples 3-19 to 3-26.

**Table 5**

| No. | First additive | | Second additive | | Third additive | | leaching out of Fe and Mn (ppm) after cycling | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|---|---|---|---|
| | Type | W1 (wt%) | Type | W2 (wt%) | Type | W3 (wt%) | | | | | |
| Example 3-1 | H2 | 1 | - | - | - | - | 6 | 159.7 | 3.82 | 1.0 | 1534 |
| Example 3-2 | H3 | 1 | - | - | - | - | 6 | 159.5 | 3.81 | 1.2 | 1423 |
| Example 3-3 | H12 | 1 | - | - | - | - | 6 | 159.6 | 3.81 | 1.1 | 1498 |
| Example 3-4 | H19 | 1 | - | - | - | - | 7 | 158.4 | 3.79 | 1.5 | 1399 |
| Example 3-5 | H20 | 1 | - | - | - | - | 7 | 158.8 | 3.80 | 1.2 | 1411 |
| Example 3-6 | H24 | 1 | - | - | - | - | 7 | 158.5 | 3.79 | 1.3 | 1401 |
| Example 3-7 | H28 | 1 | - | - | - | - | 7 | 158.3 | 3.79 | 1.7 | 1365 |
| Example 3-8 | H35 | 1 | - | - | - | - | 7 | 159.3 | 3.80 | 1.3 | 1431 |
| Example 3-9 | H36 | 1 | - | - | - | - | 6 | 159.6 | 3.81 | 1.2 | 1456 |
| Example 3-10 | H37 | 1 | - | - | - | - | 6 | 159.7 | 3.82 | 1.1 | 1501 |
| Example 3-11 | H38 | 1 | DTD | 1 | - | - | 6 | 162.1 | 3.90 | 0.5 | 1891 |
| Example 3-12 | H38 | 1 | Lithium difluorophosphate | 1 | - | - | 6 | 161.9 | 3.88 | 0.6 | 1801 |
| Example 3-13 | H38 | 1 | Lithium difluorodioxalate phosphate | 1 | - | - | 7 | 161.2 | 3.87 | 0.6 | 1767 |
| Example 3-14 | H38 | 1 | Lithium fluorosulfonate | 1 | - | - | 7 | 160.8 | 3.86 | 0.7 | 1711 |
| Example 3-15 | H38 | 1 | Lithium trifluoromethanesulfonate | 1 | - | - | 7 | 160.1 | 3.84 | 0.8 | 1623 |
| Example 3-16 | H38 | 1 | DTD | 1 | VC | 1 | 4 | 162.9 | 3.90 | 0.3 | 2134 |
| Example 3-17 | H38 | 1 | DTD | 1 | VEC | 1 | 5 | 162.5 | 3.90 | 0.4 | 1978 |
| Example 3-18 | H38 | 1 | DTD | 1 | FEC | 1 | 4 | 162.7 | 3.90 | 0.3 | 2023 |

**Table 6**

| No. | First additive | | W1/ (C1+C2) | leaching out of Fe and Mn (ppm) after cycling | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|---|
| | type | W1 (wt%) | | | | | | |
| Example 3-19 | H38 | 0.01 | 0.002 | 8 | 158.4 | 3.79 | 1.8 | 1334 |
| Example 3-20 | H38 | 0.1 | 0.02 | 7 | 158.8 | 3.81 | 1.5 | 1389 |
| Example 3-21 | H38 | 0.3 | 0.05 | 7 | 159.2 | 3.82 | 1.2 | 1467 |
| Example 3-22 | H38 | 5 | 0.83 | 6 | 159.6 | 3.82 | 0.8 | 1501 |
| Example 3-23 | H38 | 8 | 1.33 | 6 | 159.3 | 3.81 | 0.7 | 1456 |
| Example 3-24 | H38 | 10 | 1.67 | 5 | 159.0 | 3.80 | 0.5 | 1412 |
| Example 3-25 | H38 | 12 | 2.00 | 5 | 158.5 | 3.79 | 0.4 | 1389 |
| Example 3-26 | H38 | 20 | 3.33 | 4 | 158.3 | 3.78 | 0.3 | 1367 |

As can be seen from the combination of Examples 1-1 and Examples 3-1 to 3-10, the improvement effect on battery performances varies slightly depending on the type of the first additive.

As can be seen from the combination of Example 3-1 and Examples 3-11 to 3-18, when the non-aqueous electrolytic solution further comprises an appropriate amount of the second additive and/or the third additive, it is allowed to further enhance the specific capacity, rate performance cycling performance, and storage performance of batteries.

As can also be seen from the combination of Examples 3-1 and Examples 3-19 to 3-26, as the content of the first additive is increased from 0.01 wt% to 20 wt%, the leaching out of Fe and Mn from the resulting material after cycling gradually decreases, and the storage performance at 60°C of the corresponding batteries also improves, but the specific capacity, the average discharge voltage and the cycling performance at 45°C will decrease to a certain extent when the content of the first additive is higher.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A secondary battery, comprising a positive electrode plate and an non-aqueous electrolytic solution, wherein
the positive electrode plate comprises a positive electrode active material with a core-shell structure, the positive electrode active material comprising an core and a shell covering the core,
the core comprises Li₁₊ₓMn_{1-y}A_{y}P_{1-z}R_{z}O₄, x being from -0.100 to 0.100, y being from 0.001 to 0.500, and z being from 0.001 to 0.100; A being selected from Zn, Al, Na, K, Mg, Mo, W, Ti, V, Zr, Fe, Ni, Co, Ga, Sn, Sb, Nb, and Ge, optionally selected from Fe, Ti, V, Ni, Co, and Mg; R being selected from B, Si, N, and S;
the shell comprises a first cladding layer covering the core, a second cladding layer covering the first cladding layer, wherein
the first cladding layer comprises crystalline pyrophosphates MP₂O₇ and phosphate XPO₄, M and X being selected from Li, Fe, Ni, Mg, Co, Cu, Zn, Ti, Ag, Zr, Nb and Al; and
the second cladding layer comprises carbon;
the non-aqueous electrolytic solution comprises a first additive comprising one or more of the compounds shown in Formula 1: 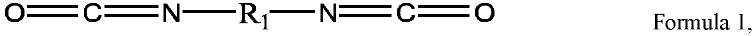 in which R₁ represents at least one of the group consisting of the following groups substituted or unsubstituted by Rₐ: C2∼C10 divalent alkyl, C2∼C10 divalent heteroalkyl, C6∼C18 divalent aryl, C7∼C18 divalent aryl alkyl, C7∼C18 divalent alkyl aryl, C8∼C18 divalent alkyl aryl alkyl, C13∼C18 divalent aryl alkyl aryl, C2∼C18 divalent heteroaryl, C3∼C18 divalent heteroarylalkyl, C3∼C18 divalent alkylheteroaryl, C4∼C18 divalent alkylheteroarylalkyl, C5∼C18 divalent heteroarylalkylheteroaryl, C3∼C18 divalent alcyl, C4∼C18 divalent alcyl alkyl, C4∼C18 divalent alkyl alcyl, C5∼C18 divalent alkyl alcyl alkyl, C7∼C18 divalent alcyl alkyl alcyl, C2∼C18 divalent heteroalcyl, C3∼C18 divalent heteroalcyl alkyl, C3∼C18 divalent alkyl heteroalcyl, C4∼C18 divalent alkyl heteroalcyl alkyl, and C5∼C18 divalent heteroalcyl alkyl heteroalcyl;
optionally, Rₐ comprises one or more selected from halogen atoms, -CN, -NCO, -OH, -COOH, - SOOH, carboxylate group, sulfonate group, sulfate group, C1∼C10 alkyl, C2∼C10 alkenyl, C2∼C10 alkynyl, C2∼C10 oxoalkyl, phenyl and benzyl.

2. The secondary battery according to claim 1, wherein R₁ represents at least one of the group consisting of the following groups substituted or unsubstituted by Rₐ: C2∼C10 alkylidene, C2∼C10 oxoalkylidene, C2∼C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m-cyclopentyldimethylene, p-cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene;
optionally, Rₐ comprises one or more selected from a fluorine atom, -CN, -NCO, -OH, -COOH, - SOOH, carboxylate group, sulfonate group, sulfate group, C1∼C10 alkyl, C2∼C10 alkenyl, C2∼C10 alkynyl, C2∼C10 oxoalkyl, phenyl and benzyl.

3. The secondary battery according to any one of claims 1 to 2, wherein the first additive comprises at least one of the following compounds:

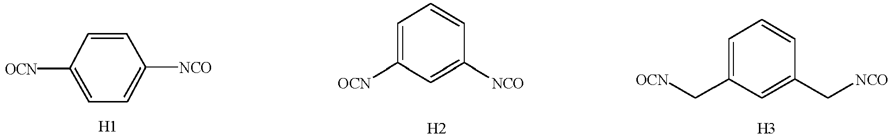

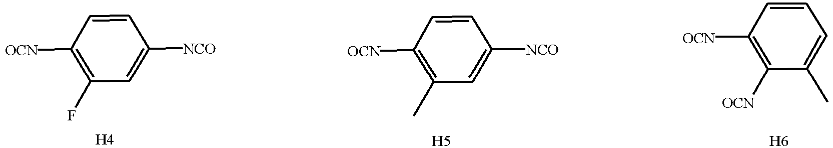

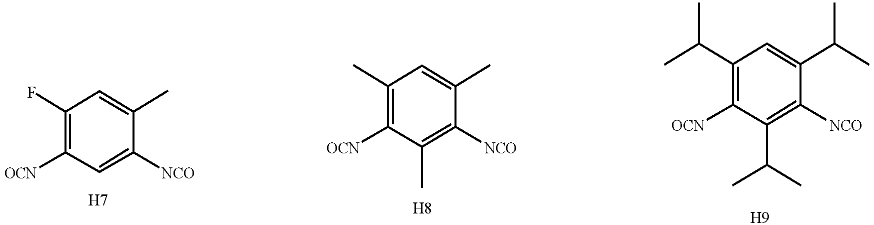

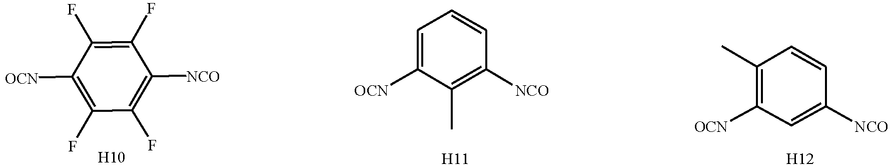

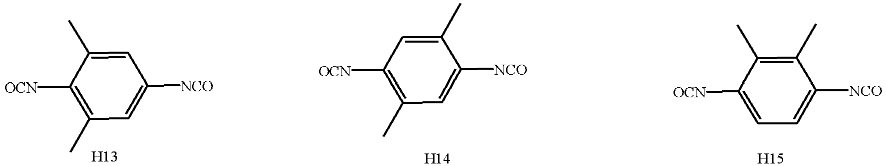

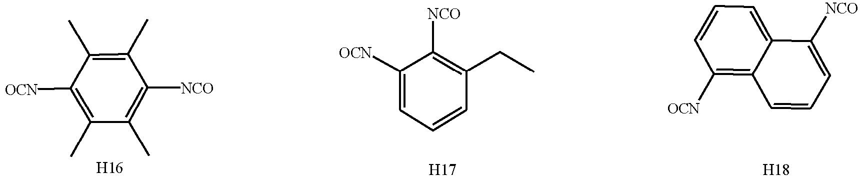

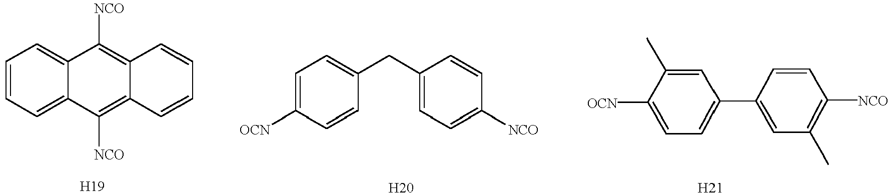

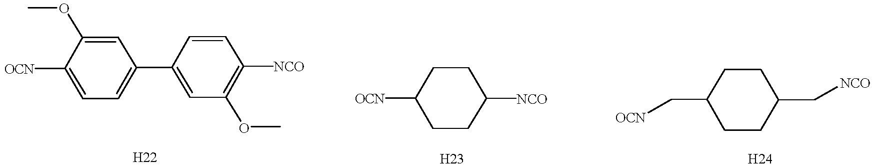

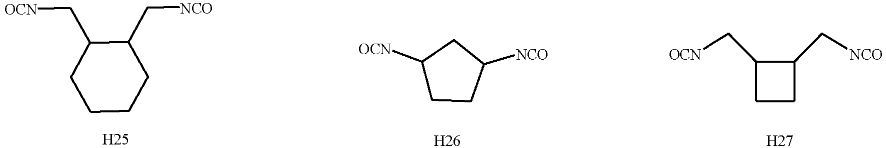

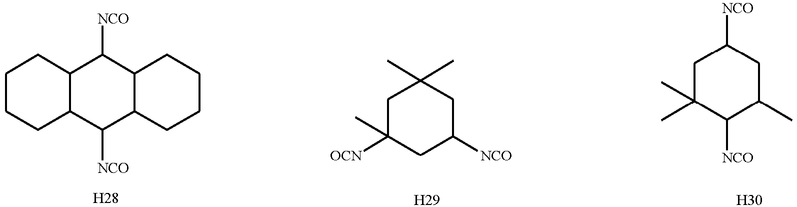

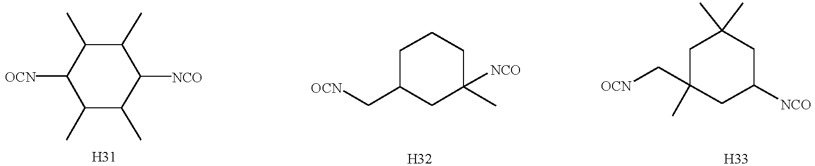

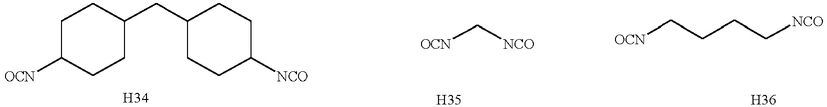

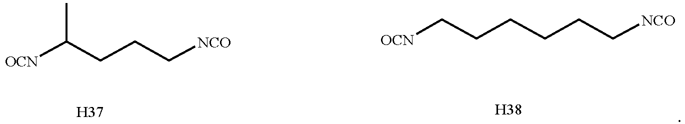

4. The secondary battery according to any one of claims 1-3, wherein
the first additive is present in an amount of W1% by weight, with W1 being 0.01 to 20, optionally 0.1 to 10, more optionally 0.3 to 5, based on the total weight of the non-aqueous electrolytic solution; and/or
the first cladding layer is applied in an amount of C1% by weight, with Cl being greater than 0 and less than or equal to 7, optionally from 4 to 5.6, based on the weight of the core; and/or
the second cladding layer is applied in an amount of C2% by weight, with C2 being greater than 0 and less than or equal to 6, optionally from 3 to 5, based on the weight of the core.

5. The secondary battery according to claim 4, wherein W1/(C1+C2) is from 0.001 to 2, optionally from 0.01 to 1.5, and more optionally from 0.05 to 1.

6. The secondary battery according to any one of claims 1-5, wherein the non-aqueous electrolytic solution further comprises a second additive, and the second additive comprises one or more of ethylene sulfate, lithium difluorophosphate, lithium bisoxalatodifluorophosphate, R₂[FSO₃⁻]ₐ, R₂[C_{b}F_{2b+1}SO₃⁻]ₐ, a being an integer from 1 to 5 and b being an integer from 1 to 6, and R2 representing a metal cation or an organic group cation;
optionally, the metal cation comprises one or more selected from Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ and Ni³⁺;
optionally, the organic group cation comprises one or more selected from NH₄⁺, N(CH₃)₄⁺, and N(CH₂CH₃)₄⁺.

7. The secondary battery according to claim 6, wherein the second additive is present in an amount of W2% by weight, with W2 being 0.01 to 20, optionally 0.1 to 10, more optionally 0.3 to 5, based on the total weight of the non-aqueous electrolytic solution.

8. The secondary battery according to any one of claims 1-7, wherein the non-aqueous electrolytic solution further comprises a third additive, and the third additive comprises one or more of a cyclic carbonate compound containing unsaturated bonds, a halogenated cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound;
optionally, the third additive is present in an amount of W3% by weight, with W3 being 0.01 to 10, optionally 0.1 to 10, more optionally 0.3 to 5, based on the total weight of the non-aqueous electrolytic solution.

9. The secondary battery according to any one of claims 1-8, wherein
in the core the ratio of y to 1-y is from 1:10 to 10:1, optionally from 1:4 to 1:1; and/or
in the core the ratio of z to 1-z is from 1:9 to 1:999, optionally from 1:499 to 1:249; and/or
A is selected from at least two of Fe, Ti, V, Ni, Co and Mg.

10. The secondary battery according to any one of claims 1-9, wherein the first cladding layer satisfies at least one of the following (1) to (4):
(1) the pyrophosphate in the first cladding layer has an interplanar spacing ranging from 0.345 nm to 0.358 nm, and a crystal orientation (111) angle ranging from 24.25° to 26.45°;
(2) the phosphate in the first cladding layer has an interplanar spacing ranging from 0.293 nm to 0.326 nm, and a crystal orientation (111) angle ranging from 26.41° to 32.57°;
(3) a weight ratio of pyrophosphate to phosphate in the first cladding layer is from 1:3 to 3:1, optionally from 1:3 to 1:1;
(4) each of the pyrophosphate and phosphate independently has a crystallinity of from 10% to 100%, optionally from 50% to 100%.

11. The secondary battery according to any one of claims 1-10, wherein the positive electrode active material satisfies at least one of the following (1) to (4):
(1) the positive electrode active material has a lattice change rate of 4% or less, optionally 2% or less;
(2) the positive electrode active material has a Li/Mn anti-site defect concentration of 6% or less, optionally 4% or less;
(3) the positive electrode active material has a surface oxygen valence of -1.88 or less, optionally - 1.98 to -1.88
(4) the positive electrode active material has a compaction density at 3T of 2.0 g/cm³ or more, optionally 2.2 g/cm³.

12. A battery module, comprising the secondary battery according to any one of claims 1 to 11.

13. A battery pack, comprising the battery module according to claim 12.

14. An electrical device comprising at least one of the secondary battery according to any one of claims 1 to 11, the battery module according to claim 12 or the battery pack according to claim 13.
